(19) Europäisches Patentamt / European Patent Office / Office européen des brevets

(11) **EP 3 907 199 B1**

(12) **EUROPÄISCHE PATENTSCHRIFT**

(45) Veröffentlichungstag und Bekanntmachung des Hinweises auf die Patenterteilung:
**23.08.2023   Patentblatt 2023/34**

(51) Internationale Patentklassifikation (IPC):
**C03C 3/091** *(2006.01)*        **C03C 4/20** *(2006.01)*
**C03C 23/00** *(2006.01)*

(21) Anmeldenummer: **21172700.3**

(52) Gemeinsame Patentklassifikation (CPC):
**C03C 3/091; C03C 4/20; C03C 23/008**

(22) Anmeldetag: **07.05.2021**

(54) **VORSPANNUNG DURCH EINSATZ EINES GRADIENTENMATERIALS**

PRESTRESSING USING GRADIENT MATERIAL

PRÉCONTRAINTE PAR UTILISATION D'UNE MATIÈRE À GRADIENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2020   EP 20173744**

(43) Veröffentlichungstag der Anmeldung:
**10.11.2021   Patentblatt 2021/45**

(73) Patentinhaber: **SCHOTT AG**
**55122 Mainz (DE)**

(72) Erfinder:
• **Eichholz, Rainer Erwin**
  **60323 Frankfurt am Main (DE)**
• **Ollig, Markus**
  **92637 Weiden (DE)**
• **Riecke, Arne**
  **95652 Waldsassen (DE)**
• **Fotheringham, Ulrich**
  **65191 Wiesbaden (DE)**

(74) Vertreter: **Fuchs Patentanwälte Partnerschaft mbB**
**Tower 185**
**Friedrich-Ebert-Anlage 35-37**
**60327 Frankfurt am Main (DE)**

(56) Entgegenhaltungen:
EP-A1- 3 360 852        DE-A1-102014 101 756
DE-A1-102017 102 482

**Beschreibung**

Die Erfindung betrifft Glasartikel, beispielsweise Glasrohre oder Flachgläser, bei denen das oberflächliche Material durch eine gezielte Prozeßführung Gradientenmaterialeigenschaften hat, die wiederum zu einer Druckvorspannung der Oberfläche führen. Die Erfindung betrifft auch ein Verfahren zur Herstellung der Glasartikel sowie deren Verwendung.

Stand der Technik

An der Oberfläche druckvorgespannte Gläser werden für viele Anwendungen benötigt, insbesondere für Anwendungen im Bereich Sicherheitsglas oder generell für Gläser, die gegen mechanische Einwirkungen resistenter sind als unvorgespannte Gläser. Es gibt verschiedene Methoden der Druckvorspannung der Oberflächen von Glasprodukten.
Bei der sogenannten chemischen Vorspannung, siehe u.a. Arun K. Varshneya, Chemical Strengthening of Glass: Lessons Learned and Yet To Be Learned, International Journal of Applied Glass Science 1 [2] 131-142 (2010), werden in der Glasoberfläche befindliche kleinere Ionen, z.B. Natriumionen, gegen größere Ionen, z.B. Kaliumionen, ausgetauscht. Dies resultiert in einer größeren Raumforderung der Oberfläche relativ zum Kernmaterial. Durch den Verbund mit dem Kernmaterial wird die Oberfläche an dieser Ausdehnung gehindert und auf die ursprüngliche Abmessung zusammengedrückt, was in entsprechenden Druckspannungen resultiert. Typischerweise findet der chemische Vorspannprozeß bei hohen Temperaturen, aber noch deutlich unterhalb des oberen Kühlpunktes $T_G$ statt.
Bei der sogenannten thermischen Vorspannung, siehe u.a. Werner Kiefer, Thermisches Vorspannen von Gläsern niedriger Wärmeausdehnung, Glastechnische Berichte 57 (1984), Nr. 9, S. 221-228, wird das Glasprodukt, beispielsweise ein Flachglas, auf eine Temperatur von beispielsweise 100K oberhalb des oberen Kühlpunktes $T_G$ erwärmt und dann schockartig durch Anblasen o.ä. gekühlt. Durch das Wechselspiel von lokal unterschiedlicher Kühlung (an der Oberfläche schnell, im Kern langsam wegen der geringen Wärmeleitfähigkeit von Glas), der daraus sich ergebenden lokal unterschiedlichen thermischen Ausdehnung, dem wiederum daraus folgenden Spannungsaufbau und der dem folgenden, stark temperaturabhängigen Spannungsrelaxation ergibt sich eine Druckvorspannung an der Oberfläche (thermische Vorspannung).
Nach der Technical Information Exchange No. 32 (TIE-32), Thermal loads on optical glass, Schott AG, Mainz, Deutschland, Oktober 2018, beträgt die thermische Vorspannung σ einer Glasscheibe

$$\sigma = f \cdot \frac{\Delta T \cdot CTE \cdot E}{1-\mu} \qquad (1)$$

Dabei ist E das Elastizitätsmodul, μ die Poissonzahl und ΔT die Differenz zwischen der Oberflächentemperatur und der Kerntemperatur der Scheibe in dem Moment, wenn die Kerntemperatur bei der Schockkühlung den oberen Kühlpunkt durchschreitet. CTE ist der thermische Ausdehnungskoeffizient des Glases. "f" ist ein Faktor, der das Verhältnis zwischen der Differenz von Oberflächentemperatur und mittlerer Scheibentemperatur zur Differenz zwischen Oberflächentemperatur und Kerntemperatur wiedergibt. "f" ist in jedem Fall kleiner als "1"; für den Fall, daß sich bis zum Durchschreiten des Glasübergangsbereiches ein "steady state" mit parabelförmigem Temperaturprofil ausgebildet hat, gilt f = 2/3.
Für ΔT gilt nach Kiefer, loc. cit.:

$$\Delta T = \frac{h \cdot d}{4 \cdot \kappa + h \cdot d} \cdot (T_G - T_{ambient}) \qquad (2)$$

Dabei ist h der Wärmeübergangskoeffizient zwischen der Scheibe und dem Kühlmedium, beispielsweise Blasluft, d die Scheibendicke, κ die Wärmeleitfähigkeit des Glases und $T_{ambient}$ die Temperatur des Kühlmediums bzw. die Umgebungstemperatur.
Beide Prozesse sind sowohl für Scheiben als auch andere Glasprodukte einsetzbar; die genannten Überlegungen gelten immer für den Fall, daß die Dicke eines jeweils betrachteten Stücks eines solchen Glasproduktes klein ist gegen dessen seitliche Abmessungen. Dies ist nicht nur bei Scheiben, sondern insbesondere auch bei Rohren, Flaschen o.ä. der Fall. Beide Prozesse erfordern allerdings einen zusätzlichen, mit einer Wiedererwärmung des Glases und erheblichem chemischen oder ingenieurtechnischen Aufwand verbundenen Verfahrensschritt.
Eine mögliche Alternative zu beiden Verfahren ergäbe sich, wenn es gelänge, bei der Herstellung in einer Oberflächenschicht die Zusammensetzung so zu ändern, daß sich dort ein geringerer CTE ergibt als im Inneren. Unter den Annahme, daß erstens bei einem Abkühlprozeß bis zum oberen Kühlpunkt $T_G$ alle von unterschiedlichen thermischen Ausdehnungen herrührenden Spannungen vollständig relaxieren und bei tieferen Temperaturen gar nicht mehr und daß zweitens die Dicke der Oberflächenschicht klein ist gegen die Dicke des betrachteten Glasstücks, folgt aus dem Hookeschen Gesetz für zweidimensionale Spannungszustände für die Druckvorspannung an der Oberfläche:

$$\sigma_O = \frac{(T_G - T_{ambient}) \cdot \Delta CTE \cdot E}{1 - \mu} \qquad (3)$$

Dabei ist $\Delta CTE$ die Differenz zwischen den thermischen Ausdehnungskoeffizienten im Kern $CTE_K$ und an der Oberfläche $CTE_O$.

Unter "Oberfläche" wird erfindungsgemäß ein Anteil des Glases verstanden, der der Grenzfläche Glas/Luft nahe ist. Das Glas, das die Oberfläche bildet, wird hier "Oberflächenglas" genannt; das übrige Glas, das weiter im Inneren liegt, wird hier "Bulkglas" oder "Kernglas" genannt. Eine genaue Abgrenzung zwischen Oberfläche und Bulk ist schwierig, daher wird für diese Erfindung definiert, dass das Oberflächenglas bis zu einer Tiefe von < 20 nm vorliegt. Die Oberflächenanalyse der Zusammensetzung kann insbesondere per TOF-SIMS erfolgen. Als Oberflächenwert wird jeweils der Mittelwert der oberflächennahen Messungen bis zu einer Tiefe < 20 nm herangezogen und die Zusammensetzung in konstituierenden Phasen mit Hilfe der inversen Matrix aus der Oxidzusammensetzung bestimmt. Bevorzugt werden 5 oder 6 Einzelmessungen in verschiedenen Tiefen ab ca. 5nm Tiefe bis <20nm Tiefe durchgeführt. Die Einzelmessungen sind hinsichtlich der Tiefe bevorzugt äquidistant. Beispielsweise können Einzelmessungen bei einer Tiefe von etwa 6 nm, 9 nm, 12 nm, 15 nm und 18 nm oder Einzelmessungen bei einer Tiefe von etwa 5 nm, 7,5 nm, 10 nm, 12,5 nm, 15 nm und 17,5 nm durchgeführt werden. Die genaue Tiefe der Einzelmessungen ist dabei nicht entscheidend. Auf der Basis der so ermittelten Zusammensetzung des Oberflächenglases werden die Eigenschaften des Oberflächenglases rechnerisch anhand der hierin erläuterten Formeln ermittelt. Die Zusammensetzung des Kernglases kann mit einer herkömmlichen chemischen Analyse der Glaszusammensetzung ermittelt werden, da die Glaszusammensetzung in größerer Tiefe durch die Herstellung keine Veränderung erfährt. Kernglas liegt jedenfalls in 500 nm Tiefe vor. Die Oberfläche kann durch bestimmte Maßnahmen während der Glasherstellung zum Vorteil beeinflusst werden. Die Zusammensetzung des Oberflächenglases bis < 20 nm Tiefe kann mittels Cs-TOF-SIMS bei 1000 eV gemessen werden. Bevorzugt werden die TOF-SIMS-Messwerte mit Hilfe der Werte aus der chemischen Analyse des Kernglases normiert. Insbesondere können die Ergebnisse der TOF-SIMS in Richtung Oberfläche fortgeschrieben werden (gleiche Signalstärke heißt gleicher Massenfluss). Man ordnet also bevorzugt einer bestimmten TOF-SIMS-Signalstärke des Kernglases (beispielsweise bestimmt in einer Tiefe von 500 nm, 600 nm oder 700 nm) eine Konzentration in % zu und zwar genau die, die der Konzentration aus der chemischen Analyse des Glases entspricht. Es kann auch der Mittelwert von TOF-SIMS-Signalstärken des Kernglases in verschiedenen Tiefen verwendet werden, beispielsweise der Mittelwert der Signalstärken in einer Tiefe von 500 nm, 600 nm und 700 nm. Bestimmt werden mit TOF-SIMS insbesondere die Signalstärken für Si, B, Al, Na, K, Mg und Ca. Diese Werte schreibt man zur Oberfläche hin fort, d.h. also, wenn sich eine Signalstärke von x ergeben hat, die einer Konzentration von 20% entspricht, und man an der Oberfläche auch x misst, setzt man die Oberflächenkonzentration zunächst auch gleich 20%. Wenn man an der Oberfläche statt des Wertes x den Wert 2x misst, setzt man die Oberflächenkonzentration gleich 40%. Anschließend werden die so ermittelten Oberflächenkonzentrationen bevorzugt so normiert, dass deren Summe 100% beträgt.

Das Dokument EP 3 360 852 A1 beschreibt Gläser und Glasprodukte, die gute Laugen- und hydrolytische Beständigkeit mit vorteilhaften thermischen Ausdehnungseigenschaften vereinen, wobei diese Ausdehnungseigenschaften im Glasinneren ("Bulk") und an der Oberfläche möglichst ähnlich oder gleich sein sollten. Das Dokument DE 10 2017 102482 A1 beschreibt Gläser und Glasprodukte, die gute chemische Vorspannbarkeit mit geringer Fragilität und vorteilhaften thermischen Ausdehnungseigenschaften vereinen.

## Aufgabe

Im Stand der Technik fehlt es an einem Verfahren, mit dem Glasprodukte durch eine Modifikation des Herstellungsverfahrens quasi "inline" an der Oberfläche druckvorgespannt werden können.

Diese Aufgabe wird durch die Gegenstände der Patentansprüche gelöst.

## Beschreibung der Erfindung

Die Aufgabe wird durch eine gezielte Kombination eines Herstellungsverfahrens und geeigneter Gläser gelöst. Kern des Herstellungsverfahrens ist eine Veränderung der Oberflächenzusammensetzung gegenüber der Kernzusammensetzung durch gezielten Abtrag einzelner Komponenten. Dadurch werden Glasartikel erhalten, die ein Oberflächenglas mit im Vergleich zum Kernglas veränderter Zusammensetzung umfassen, so dass sich der thermische Ausdehnungskoeffizient an der Oberfläche und im Kern unterscheidet.

Die geeigneten Gläser wiederum werden ihrerseits im folgenden als Kombination von stöchiometrischen Gläsern beschrieben, also Gläsern, die in derselben Stöchiometrie auch als Kristalle existieren und deren Eigenschaft wegen der - wie in der Literatur an vielen Beispielen durch NMR-Messungen o.ä. überprüft - identischen Topologie der Baugruppen jeweils für Glas und Kristall als sehr ähnlich angenommen werden können. Hierfür werden solche stöchiometrischen Gläser ausgewählt, deren Mischung ein Verhalten im Sinne einer Lösung der erfindungsgemäßen Aufgabe erzielbar macht. In dieser Anmeldung werden diese stöchiometrischen Gläser auch als "Grundgläser" bzw. "konstituierende Phasen" bezeichnet.

Es ist kein neues Konzept, Gläser anhand der ihnen zuzuordnenden konstituierenden Phasen zu beschreiben. Durch die Angabe der Grundgläser lassen sich Rückschlüsse auf die chemische Struktur eines Glases ziehen (vgl. Conradt R: "Chemical structure, medium range order, and crystalline reference state of multicomponent oxide liquids and glasses", in Journal of Non-Crystalline Solids, Volumes 345-346, 15 October 2004, Pages 16-23).

Die vorliegende Erfindung betrifft ein Glas mit einer Zusammensetzung, die durch die folgenden das Glas konstituierenden Phasen gekennzeichnet ist:

**Tabelle 1**

| konstituierende Phase | Min (Mol%) | Max (Mol%) |
|---|---|---|
| Reedmergnerit | 10 | 80 |
| Kalium-Reedmergnerit | 0 | 30 |
| Albit | 0 | 50 |
| Cordierit | 0 | 10 |
| Anorthit | 0 | 25 |
| Dibortrioxid | 0 | 20 |
| Siliziumdioxid | 5 | 60 |

Die Erfindung betrifft insbesondere einen Glasartikel, umfassend ein Kernglas und ein Oberflächenglas, wobei das Oberflächenglas bis zu einer Tiefe von < 20 nm vorliegt und das Kernglas jedenfalls in 500 nm Tiefe vorliegt, wobei das Kernglas gekennzeichnet ist durch folgende das Kernglas konstituierenden Phasen:

| konstituierende Phase | Min (Mol%) | Max (Mol%) |
|---|---|---|
| Reedmergnerit | 10 | 80 |
| Kalium-Reedmergnerit | 0 | 30 |
| Albit | 0 | 50 |
| Cordierit | 0 | 10 |
| Anorthit | 0 | 25 |
| Dibortrioxid | 0 | 20 |
| Siliziumdioxid | 5 | 60 |

wobei das Oberflächenglas gekennzeichnet ist durch folgende das Oberflächenglas konstituierenden Phasen:

| konstituierende Phase | Min (Mol%) | Max (Mol%) |
|---|---|---|
| Reedmergnerit | 2 | 60 |
| Kalium-Reedmergnerit | 0 | 40 |
| Albit | 0 | 70 |
| Cordierit | 0 | 10 |
| Anorthit | 0 | 20 |
| Dibortrioxid | 0 | 15 |
| Siliziumdioxid | 6 | 80 |

wobei das Kernglas einen nach Formel (14) berechneten $CTE_K$ in einem Bereich von 3,0 bis 7,0 ppm/K aufweist, und wobei das Oberflächenglas einen nach Formel (14) berechneten CTEo aufweist, der im Vergleich zu dem nach Formel (14) berechneten $CTE_K$ des Kernglases um mindestens 0,6 ppm/K geringer ist.

Der erfindungsgemäße Glasartikel kann beispielsweise ein Glasrohr oder ein pharmazeutischer Behälter (beispielsweise eine Flasche, Ampulle, Karpule oder Spritze) sein. Der Außendurchmesser liegt bevorzugt in einem Bereich von 2 mm bis 465 mm, beispielsweise von 3 mm bis 180 mm, insbesondere von 5 bis 65 mm oder von 10 mm bis 50 mm. Der Außendurchmesser kann beispielsweise mindestens 5 mm oder mindestens 10 mm betragen. Der Außendurchmesser kann beispielsweise höchstens 180 mm, höchstens 65 mm oder höchstens 50 mm betragen. Die Wanddicke liegt bevorzugt in einem Bereich von 0,1 mm bis 7 mm, beispielsweise von 0,2 mm bis 3,0 mm oder von 0,2 mm bis 2,0 mm. Die Wanddicke kann beispielsweise mindestens 0,1 mm oder mindestens 0,2 mm betragen. Die Wanddicke kann beispielsweise höchstens 3,0 mm oder höchstens 2,0 mm betragen. Das Verhältnis von Außendurchmesser zu Wanddicke liegt bevorzugt in einem Bereich von 3:1 bis 70:1, beispielsweise von 5:1 bis 50:1, von 10:1 bis 40: 1, oder von 20:1 bis 30:1. Das Verhältnis von Außendurchmesser zu Wanddicke kann beispielsweise mindestens 10:1, mindestens 15:1, oder mindestens 20:1 betragen. Das Verhältnis von Außendurchmesser zu Wanddicke kann beispielsweise höchstens 50:1, höchstens 40:1, oder höchstens 30:1 betragen.

Der Glasartikel kann eine innere und eine äußere Oberfläche aufweisen, beispielsweise wenn der Artikel in Form eines Rohrs oder eines Behälters wie einer Flasche vorliegt. Das erfindungsgemäße Oberflächenglas ist bevorzugt ausschließlich an der äußeren Oberfläche lokalisiert. Die innere Oberfläche ist also im Gegensatz zur äußeren Oberfläche bevorzugt durch dieselben Anteile der konstituierenden Phasen gekennzeichnet wie das Kernglas.

Bevorzugt liegt das erfindungsgemäße Oberflächenglas an mindestens 50%, weiter bevorzugt mindestens 75%, weiter bevorzugt mindestens 90%, weiter bevorzugt mindestens 95%, weiter bevorzugt mindestens 99% der äußeren Oberfläche des Glasartikels vor. Besonders bevorzugt liegt das erfindungsgemäße Oberflächenglas an der gesamten äußeren Oberfläche vor.

Ferner soll das erfindungsgemäße Glas bevorzugt weitere Bedingungen erfüllen, die mit der Zusammensetzung aus konstituierenden Phasen in formelmäßigen Zusammenhängen stehen, die weiter unten aufgezeigt werden.

Wir geben zunächst eine Umrechnungsmatrix für die Umrechnung der Zusammensetzungsangaben von konstituierenden Phasen in einfache Oxide an.

## Umrechnung von der Zusammensetzung aus konstituierenden Phasen in Zusammensetzung aus einfachen Oxiden und umgekehrt

Die Zusammensetzung in konstituierenden Phasen wird zum Zweck der Umrechnung in der folgenden normierten Form angegeben:

**Tabelle 2**

| konstituierende Phase | Formel (auf ein einfaches Oxid normiert) |
| --- | --- |
| Reedmergnerit | $(Na_2O \cdot B_2O_3 \cdot 6SiO_2)/8$ |
| Kalium-Reedmergnerit | $(K_2O \cdot B_2O_3 \cdot 6SiO_2)/8$ |
| Albit | $(Na_2O \cdot Al_2O_3 \cdot 6SiO_2)/8$ |
| Cordierit | $(2MgO \cdot 2Al_2O_3 \cdot 5SiO_2)/9$ |
| Anorthit | $(CaO \cdot Al_2O_3 \cdot 2SiO_2)/4$ |
| Dibortrioxid | $B_2O_3$ |
| Siliziumdioxid | $SiO_2$ |

Die Umrechnung dieser Zusammensetzungen in eine Zusammensetzungsangabe in Mol-% bezüglich der folgenden einfachen Oxide ...

| # | Oxid |
| --- | --- |
| 1. | $SiO_2$ |
| 2. | $B_2O_3$ |
| 3. | $Al_2O_3$ |

(fortgesetzt)

| # | Oxid |
|---|------|
| 4. | MgO |
| 5. | CaO |
| 6. | $Na_2O$ |
| 7. | $K_2O$ |

... erfolgt mit Hilfe der hier angegebenen Matrix. Dabei wird die Zusammensetzungsangabe in Mol-% hinsichtlich der Grundgläser als Spaltenvektor von rechts an die Matrix multipliziert:

**Matrix**

| 6/8 | 6/8 | 6/8 | 5/9 | 2/4 | 0 | 1 | | $(Na_2O-B_2O_3-6SiO_2)/8$ |
|-----|-----|-----|-----|-----|---|---|---|------|
| 1/8 | 1/8 | 0 | 0 | 0 | 1 | 0 | | $(K_2O \cdot B_2O_3 \cdot 6SiO_2)/8$ |
| 0 | 0 | 1/8 | 2/9 | 1/4 | 0 | 0 | | $(Na_2O \cdot Al_2O_3 \cdot 6SiO_2)/8$ |
| 0 | 0 | 0 | 2/9 | 0 | 0 | 0 | x | $(2MgO \cdot 2Al_2O_3 \cdot 5SiO_2)/9$ |
| 0 | 0 | 0 | 0 | 1/4 | 0 | 0 | | $(CaO-Al_2O_3 \cdot 2SiO_2)/4$ |
| 1/8 | 0 | 1/8 | 0 | 0 | 0 | 0 | | $B_2O_3$ |
| 0 | 1/8 | 0 | 0 | 0 | 0 | 0 | | $SiO_2$ |

Als Ergebnis der Multiplikation des Spaltenvektors an die Matrix erhält man die Zusammensetzung des Glases in Molprozenten.

Umgekehrt lässt sich eine Zusammensetzung in Molprozenten einfach über die jeweilige inverse Matrix in eine Grundglaszusammensetzung überführen. Dabei gelten natürlich nur solche Grundglaszusammensetzungen als erfindungsgemäß, die bei Umrechnung keine negativen Werte für die Grundgläser ergeben.

Im folgenden werden die weiteren Bedingungen dargelegt, die die erfindungsgemäßen Gläser erfüllen sollen und die z.T. mit der Zusammensetzung aus konstituierenden Phasen in formelmäßigen Zusammenhängen stehen, insbesondere bestimmte Oberflächeneigenschaften.

Um diese Oberflächeneigenschaften genau beschreiben zu können, muß zunächst die Herleitung der Gleichungen (3) einschließlich der dabei gemachten Annahmen referiert werden.

Bei der Herleitung von (3) wird zunächst davon ausgegangen, daß während eines Kühlvorganges bis zum oberen Kühlpunkt alle Spannungen instantan relaxieren und ab dem oberen Kühlpunkt gar nicht mehr relaxieren, entsprechend der Näherung von Franz Simon, Über den Zustand der unterkühlten Flüssigkeiten und Gläser, Zeitschrift für anorganische und allgemeine Chemie 203, Nr. 1 (1931), S. 219-227. Aus dem Unterschied zwischen dem Ausdehnungskoeffizienten an der Oberfläche und im Kern resultiert dann bei Raumtemperatur, hier als $T_{ambient}$ bezeichnet, eine relative Verzerrung $(T_G - T_{ambient}) \cdot \Delta CTE$ des Oberflächen- und des Kernmaterials. Im Gleichgewicht herrscht in der Oberfläche eine Druckvorspannung $\sigma_O$ und im Kern eine Zugvorspannung $\sigma_K$, die wegen der Gleichgewichtsbedingung

$$0 = \int_0^a \sigma(z)dz \qquad (4)$$

dem Zusammenhang

$$0 = \sigma_O \cdot d_O + \sigma_K \cdot \left(\frac{a}{2} - d_O\right) \qquad (5)$$

genügen müssen. Dabei geht das Integral in (4) in Normalenrichtung über die Scheibendicke a, $d_O$ ist die Dicke der Oberflächenschicht.

Im Falle eines ebenen Spannungszustandes gilt für den Zusammenhang zwischen Verzerrung ε und Spannung σ:

$$\sigma = -\varepsilon \cdot \frac{E}{1-\mu} \qquad (6)$$

so daß gilt:

$$0 = \varepsilon_O \cdot d_O + \varepsilon_K \cdot \left(\frac{a}{2} - d_O\right) \qquad (7)$$

wobei so die Verzerrung an der Oberfläche und $\varepsilon_K$ die Verzerrung im Kern ist.

Wie oben gesagt, gilt für die relative Verzerrung von Oberfläche und Kern, also $\varepsilon_O$ - $\varepsilon_K$, die Beziehung:

$$\varepsilon_O - \varepsilon_K = -(T_G - T_{ambient}) \cdot \Delta CTE \qquad (8)$$

Wenn wir jetzt noch davon ausgehen, daß die Oberflächenschicht mit verändertem CTE sehr viel dünner ist als der Kern des Glases, können wir $\varepsilon_K$ vernachlässigen und schreiben:

$$\varepsilon_O \approx -(T_G - T_{ambient}) \cdot \Delta CTE \qquad (9)$$

bzw.

$$\sigma_O = \frac{E}{1-\mu} \cdot (T_G - T_{ambient}) \cdot \Delta CTE \qquad (10)$$

Beim Übergang von (9) auf (10) wird näherungsweise angenommen, daß der Elastizitätsmodul E und die Poissonzahl $\mu$ nur in einem schwachen und hier vernachlässigbaren Maße von der Zusammensetzung abhängen, wohingegen der CTE stark von der Zusammensetzung abhängt. Diese Annahme steht in Übereinstimmung mit den Eigenschaften üblicher technischer Gläser, siehe Schott, Technical Glasses, Physical and Technical Properties, Mainz, 2014, https://www.us.schott.com/d/epackaging/0ad24277-2ace-4d9a-999d-736ed389f6cc/1.3/18.11.15 final schott technical_glasses_us.pdf..

Die Gleichung (10) läßt sich sofort verallgemeinern auf den Fall, daß der CTE in Oberflächennähe einen von der Tiefe z abhängenden Verlauf nimmt. Voraussetzung ist nur, daß die Dicke der Oberflächenschicht, in der der CTE vom Wert im Kernbereich verschieden ist, klein gegen die Gesamtdicke der Scheibe ist. Man erhält dann:

$$\sigma(z) = \frac{E}{1-\mu} \cdot (T_G - T_{ambient}) \cdot \left(CTE_K - CTE(z)\right) \qquad (11)$$

Erfindungsgemäß sind Glasprodukte wie Rohre oder Scheiben, bei denen sich in Oberflächennähe durch eine Variation des CTE mit der Tiefe z entweder ein stufenförmiger oder ein kontinuierlicher Spannungsverlauf ausbildet, mit einer Zugspannungszone im Kern des Glasproduktes und einer Druckspannungs(verlaufs)zone an der Oberfläche.

Setzt man in (10) die für technische Gläser typischen Werte E = 72 GPa, $\mu$ = 0.2, $T_G$ = 575°C ein und setzt $T_{ambient}$ = 25°C, so erhält man:

$$\sigma_O = 49500 \, GPa \cdot K \cdot \Delta CTE \qquad (12)$$

Damit führt ein $\Delta CTE$ von 0.5ppm/K zu $\sigma_O \approx 25$ MPa, ein $\Delta CTE$ von 1ppm/K zu $\sigma_O \approx 50$ MPa usw.

Dieser Wert, also 50MPa, liegt in der Größenordnung dessen, was man als Druckvorspannung direkt an der Oberfläche eines sogenannten teilvorgespannten Glases mißt (40-60 MPa, siehe B. Weller, S. Tasche, Glasbau; in: Wendehorst Bautechnische Zahlentafeln, Hrsg.: O.W. Wetzell, 32. Auflage, 2007; zitiert nach K.-Ch. Thienel, Scriptum zur Vorlesung "Werkstoffe des Bauwesens / Glas", Institut für Werkstoffe des Bauwesens, Fakultät für Bauingenieur- und Vermessungswesen, Universität der Bundeswehr München, Frühjahrstrimester 2018, www.unibw.de > lehre > skripte-werkstoffe > glas-2018.pdf).

Druckvorspannungswerte dieser Größenordnung sind Ziel der vorliegenden Erfindung. Druckvorspannungen erhöhen die Festigkeit, u.a. durch das Zusammendrücken von Rissen, deren Tiefe in der Größenordnung der Dicke der Druckspannungszone liegt. Mit einer Druckvorspannungszone einer Dicke im zweistelligen Nanometerbereich lassen sich beispielsweise die für frisch gezogenes Glas typischen Risse der Tiefe 1nm bis 10nm zusammendrücken, mit einer Druckvorspannungszone einer Dicke im dreistelligen Nanometerbereich die für frisch gezogenes und dann (z.B. zur Spannungsrelaxation) wärmebehandeltes Glas typischen Risse der Tiefe 100nm, siehe R.E. Mould, The Strength of Inorganic Glasses, in: Fundamental Phenomena in the Materials Sciences, Herausgeber L.J. Bonis, J.J. Duga und J.J. Gilman, 119-149 (1967), zitiert nach Hong Li, Strength of Glass and Glass Fiber, Invited presentation, 76th Conference on Glass Problems, GMIC, Alfred University, Am. Ceram. Soc. (Columbus, OH, Nov 2-5, 2015), https://www.researchgate.net/publication/303099608_Strength_of_Glass_and_Glass_Fibers.

Risse der genannten Größenordnungen sind insbesondere dann nicht zu vernachlässigen, wenn es gelingt, die Handhabung von erfindungsgemäßen Bauteilen wie Rohren oder Fläschchen so durchzuführen, daß es dabei zu keinen (im wörtlichen Sinne) tiefergehenden Verletzungen des Glases kommt.

Erfindungsgemäß sind demgemäß Glasprodukte, deren Zusammensetzung im Kern und bevorzugt auch im Oberflächenbereich in den durch Tabelle 1 angegebenen Zusammensetzungsbereich fällt und für die die Differenz $CTE_K$ - $CTE_O$ mindestens 0.6ppm/K beträgt, bevorzugt mindestens 0.8ppm/K, besonders bevorzugt mindestens 1ppm/K, am meisten bevorzugt mindestens 1.2ppm/K.

Diese Differenz wird bestimmt von den Zusammensetzungen in den Bereichen von Kern und Oberfläche, aus denen die jeweiligen Ausdehnungskoeffizienten folgen, sowie der Kombination aus Zusammensetzung und Herstellungsverfahren, aus der wiederum der Unterschied der Zusammensetzungen von Kern und Oberfläche resultiert.

Da sich der thermische Ausdehnungskoeffizient in sehr guter Näherung über die mittlere Bindungsstärke aus der Zusammensetzung berechnen läßt, werden hier die so berechneten Werte verwendet. $CTE_K$ und $CTE_O$ werden aus der ermittelten Zusammensetzung in konstituierenden Phasen im Kernglas bzw. Oberflächenglas gemäß Formel (14) berechnet.

Für den Quotienten aus dem elastischen Modul und der Größe $(1-\mu)$ sind in dem obigen Rechenbeispiel typische Werte verwendet worden.

Erfindungsgemäß bevorzugt sind Glasprodukte, deren Zusammensetzung im Kern- und bevorzugt auch im Oberflächenbereich in den durch Tabelle 1 angegebenen Zusammensetzungsbereich fällt und für die der Quotient aus dem elastischen Modul und der Größe $(1-\mu)$ mindestens 80 GPa beträgt, bevorzugt mindestens 85 GPa.

Maßgeblich für die Druckvorspannung an der Oberfläche ist allerdings nicht der Quotient aus dem elastischen Modul und der Größe $(1-\mu)$ im Kernbereich, sondern an der Oberfläche. Es ist daher bevorzugt, daß sich dieser Quotient trotz der unterschiedlichen Zusammensetzungen im Kern und an der Oberfläche nicht stark ändert.

Erfindungsgemäß bevorzugt sind mithin Glasprodukte, deren Zusammensetzung im Kern- und bevorzugt auch im Oberflächenbereich in den durch Tabelle 1 angegebenen Zusammensetzungsbereich fällt und für die sich der Quotient aus dem elastischen Modul und der Größe $(1-\mu)$ an der Oberfläche im Vergleich zu dem entsprechenden Quotienten im Kern um maximal 10% unterscheidet, bevorzugt um maximal 8%, besonders bevorzugt um maximal 6%, ganz besonders bevorzugt um maximal 4%.

Da sich auch der elastische Modul in sehr guter Näherung über die mittlere Bindungsstärke aus der Zusammensetzung berechnen läßt und sich die Poissonzahl ebenfalls in sehr guter Näherung aus der Packungsdichte und den Vernetzungszahlen berechnen läßt, werden im folgenden die auf diese Weise berechneten Werte verwendet (Formeln (29) und (27)).

Bevorzugt liegt der mit Hilfe der Formeln (29) und (27) aus der Zusammensetzung des Kernglases in konstituierenden Phasen berechnete Quotient $Q_K$ aus dem elastischen Modul E und der Größe $(1-\mu)$ in einem Bereich von 80 GPa bis 105 GPa, weiter bevorzugt von 85 GPa bis 100 GPa, weiter bevorzugt von 90 GPa bis 95 GPa. Bevorzugt beträgt der mit Hilfe der Formeln (29) und (27) aus der Zusammensetzung des Kernglases in konstituierenden Phasen berechnete Quotient $Q_K$ aus dem elastischen Modul E und der Größe $(1-\mu)$ mindestens 80 GPa, mindestens 85 GPa oder mindestens 90 GPa. Bevorzugt beträgt der mit Hilfe der Formeln (29) und (27) aus der Zusammensetzung des Kernglases in konstituierenden Phasen berechnete Quotient $Q_K$ aus dem elastischen Modul E und der Größe $(1-\mu)$ höchstens 105 GPa, höchstens 100 GPa oder höchstens 95 GPa. E lässt sich mit Hilfe der Formel (29) und $\mu$ mit Hilfe der Formel (27) berechnen. Der Quotient aus E und $(1-\mu)$ lässt sich mit Hilfe der für E und $\mu$ erhaltenen Werte leicht bilden. Wie oben erläutert sollte sich der Quotient trotz der unterschiedlichen Zusammensetzungen im Kern nicht stark von dem entsprechenden Quotienten an der Oberfläche unterscheiden. Bevorzugt entspricht der mit Hilfe der Formeln (29) und (27) aus der Zusammensetzung des Oberflächenglases in konstituierenden Phasen berechnete Quotient Qo aus dem elastischen Modul und der Größe $(1-\mu)$ dem Quotienten $Q_K \pm 10\%$, weiter bevorzugt $Q_K \pm 8\%$, weiter bevorzugt $Q_K \pm 6\%$, weiter bevorzugt $Q_K \pm 4\%$. Bevorzugt beträgt der mit Hilfe der Formeln (29) und (27) aus der Zusammensetzung des Oberflächenglases in konstituierenden Phasen berechnete Quotient Qo aus dem elastischen Modul und der Größe $(1-\mu)$ mindestens $Q_K - 10\%$, weiter bevorzugt mindestens $Q_K - 8\%$, weiter bevorzugt mindestens $Q_K - 6\%$, weiter bevorzugt mindestens $Q_K - 4\%$. Bevorzugt beträgt der mit Hilfe der Formeln (29) und (27) aus der Zusammensetzung des Oberflächenglases in konstituierenden Phasen berechnete Quotient Qo aus dem elastischen Modul und der Größe $(1-\mu)$

höchstens $Q_K$ + 10%, weiter bevorzugt höchstens $Q_K$ + 8%, weiter bevorzugt höchstens $Q_K$ + 6%, weiter bevorzugt höchstens $Q_K$ + 4%.

Erfindungsgemäß bevorzugt sind ferner Glasprodukte, deren Zusammensetzung im Kern- und bevorzugt auch im Oberflächenbereich in den durch Tabelle 1 angegebenen Zusammensetzungsbereich fällt und für die der $T_G$ mindestens 564°C, bevorzugt 566°C, besonders bevorzugt 568°C, ganz besonders bevorzugt 570°C, noch weiter bevorzugt 572°C, am meisten bevorzugt 574°C beträgt.

Da sich auch der obere Kühlpunkt $T_G$ in sehr guter Näherung über die mittlere Bindungsstärke und die Zahl der Winkelfreiheitsgrade pro Atom aus der Zusammensetzung berechnen läßt, werden hier die so berechneten Werte verwendet (Formeln (35) und (33)).

Bevorzugt liegt der nach Formel (33) aus der Zusammensetzung des Kernglases in konstituierenden Phasen berechnete Verarbeitungspunkt $VA_K$ in einem Bereich von 1120°C bis 1280°C, weiter bevorzugt von 1150°C bis 1250°C, weiter bevorzugt von 1180°C bis 1230°C, weiter bevorzugt von 1190°C bis 1220°C. Bevorzugt beträgt der nach Formel (33) aus der Zusammensetzung des Kernglases in konstituierenden Phasen berechnete Verarbeitungspunkt $VA_K$ mindestens 1120°C, weiter bevorzugt mindestens 1150°C, weiter bevorzugt mindestens 1180°C, weiter bevorzugt mindestens 1190°C. Bevorzugt beträgt der nach Formel (33) aus der Zusammensetzung des Kernglases in konstituierenden Phasen berechnete Verarbeitungspunkt $VA_K$ höchstens 1280°C, weiter bevorzugt höchstens 1250°C, weiter bevorzugt höchstens 1230°C, weiter bevorzugt höchstens 1220°C. Bevorzugt entspricht der mit Hilfe der Formel (33) aus der Zusammensetzung des Oberflächenglases in konstituierenden Phasen berechnete Verarbeitungspunkt VAo dem Verarbeitungspunkt $VA_K$ $\pm$ 10%, weiter bevorzugt $VA_K$ $\pm$ 8%, weiter bevorzugt $VA_K$ $\pm$ 6%, weiter bevorzugt $VA_K$ $\pm$ 4%. Bevorzugt beträgt der mit Hilfe der Formel (33) aus der Zusammensetzung des Oberflächenglases in konstituierenden Phasen berechnete Verarbeitungspunkt VAo mindestens $VA_K$ - 10%, weiter bevorzugt mindestens $VA_K$ - 8%, weiter bevorzugt mindestens $VA_K$ - 6%, weiter bevorzugt mindestens $VA_K$ - 4%. Bevorzugt beträgt der mit Hilfe der Formel (33) aus der Zusammensetzung des Oberflächenglases in konstituierenden Phasen berechnete Verarbeitungspunkt VAo höchstens $VA_K$ + 10%, weiter bevorzugt höchstens $VA_K$ + 8%, weiter bevorzugt höchstens $VA_K$ + 6%, weiter bevorzugt höchstens $VA_K$ + 4%.

Bevorzugt liegt der nach Formel (35) aus der Zusammensetzung des Kernglases in konstituierenden Phasen berechnete obere Kühlpunkt $T_{G(K)}$ in einem Bereich von 540°C bis 650°C, weiter bevorzugt von 550°C bis 640°C, weiter bevorzugt von 560°C bis 630°C, weiter bevorzugt von 570°C bis 620°C, weiter bevorzugt von 580°C bis 610°C, weiter bevorzugt von 590°C bis 600°C. Bevorzugt beträgt der nach Formel (35) aus der Zusammensetzung des Kernglases in konstituierenden Phasen berechnete obere Kühlpunkt $T_{G(K)}$ mindestens 540°C, weiter bevorzugt mindestens 550°C, weiter bevorzugt mindestens 560°C, weiter bevorzugt mindestens 570°C, weiter bevorzugt mindestens 580°C, weiter bevorzugt mindestens 590°C. Bevorzugt liegt der nach Formel (35) aus der Zusammensetzung des Kernglases in konstituierenden Phasen berechnete obere Kühlpunkt $T_{G(K)}$ höchstens 650°C, weiter bevorzugt höchstens 640°C, weiter bevorzugt höchstens 630°C, weiter bevorzugt höchstens 620°C, weiter bevorzugt höchstens 610°C, weiter bevorzugt höchstens 600°C. Bevorzugt entspricht der mit Hilfe der Formel (35) aus der Zusammensetzung des Oberflächenglases in konstituierenden Phasen berechnete obere Kühlpunkt $T_{G(O)}$ dem oberen Kühlpunkt $T_{G(K)}$ $\pm$ 10%, weiter bevorzugt $T_{G(K)}$ $\pm$ 8%, weiter bevorzugt $T_{G(K)}$ $\pm$ 6%, weiter bevorzugt $T_{G(K)}$ $\pm$ 4%. Bevorzugt beträgt der mit Hilfe der Formel (35) aus der Zusammensetzung des Oberflächenglases in konstituierenden Phasen berechnete obere Kühlpunkt $T_{G(O)}$ mindestens $T_{G(K)}$ - 10%, weiter bevorzugt mindestens $T_{G(K)}$ - 8%, weiter bevorzugt mindestens $T_{G(K)}$ - 6%, weiter bevorzugt mindestens $T_{G(K)}$ - 4%. Bevorzugt beträgt der mit Hilfe der Formel (35) aus der Zusammensetzung des Oberflächenglases in konstituierenden Phasen berechnete obere Kühlpunkt $T_{G(O)}$ höchstens $T_{G(K)}$ + 10%, weiter bevorzugt höchstens $T_{G(K)}$ + 8%, weiter bevorzugt höchstens $T_{G(K)}$ + 6%, weiter bevorzugt höchstens $T_{G(K)}$ + 4%.

Bevorzugt liegt die nach Formel (10) berechnete Druckvorspannung an der Oberfläche $\sigma_O$ in einem Bereich von 25 bis 85 MPa, weiter bevorzugt von 30 bis 80 MPa, weiter bevorzugt von 35 bis 75 MPa, weiter bevorzugt von 40 bis 70 MPa, beispielsweise 45 bis 65 MPa oder 50 bis 60 MPa, wenn der Quotient aus dem elastischen Modul und der Größe (1-$\mu$) mit Hilfe der Formeln (29) und (27) aus der Zusammensetzung des Kernglases in konstituierenden Phasen berechnet wird, wenn der obere Kühlpunkt $T_G$ nach Formel (35) aus der Zusammensetzung des Kernglases in konstituierenden Phasen berechnet wird, wenn $\Delta$CTE als Differenz des nach Formel (14) berechneten $CTE_K$ und des nach Formel (14) berechneten CTEo berechnet wird, und wenn $T_{ambient}$ = 25°C angenommen wird. Bevorzugt beträgt die so nach Formel (10) berechnete Druckvorspannung an der Oberfläche $\sigma_O$, wenn der Quotient aus dem elastischen Modul und der Größe (1-$\mu$) mit Hilfe der Formeln (29) und (27) aus der Zusammensetzung des Kernglases in konstituierenden Phasen berechnet wird, wenn der obere Kühlpunkt $T_G$ nach Formel (35) aus der Zusammensetzung des Kernglases in konstituierenden Phasen berechnet wird, wenn $\Delta$CTE als Differenz des nach Formel (14) berechneten $CTE_K$ und des nach Formel (14) berechneten CTEo berechnet wird, und wenn $T_{ambient}$ = 25°C angenommen wird, mindestens 25 MPa, weiter bevorzugt mindestens 30 MPa, weiter bevorzugt mindestens 35 MPa, weiter bevorzugt mindestens 40 MPa, beispielsweise mindestens 45 MPa oder mindestens 50 MPa. Bevorzugt beträgt die so nach Formel (10) berechnete Druckvorspannung an der Oberfläche $\sigma_O$, wenn der Quotient aus dem elastischen Modul und der Größe (1-$\mu$) mit Hilfe der Formeln (29) und (27) aus der Zusammensetzung des Kernglases in konstituierenden Phasen berechnet wird, wenn der obere Kühlpunkt $T_G$ nach Formel (35) aus der Zusammensetzung des Kernglases in konstituierenden Phasen berechnet wird, wenn $\Delta$CTE als Differenz des nach Formel (14) berechneten $CTE_K$ und des nach Formel (14) berechneten CTEo berechnet wird, und wenn $T_{ambient}$ = 25°C angenommen wird, höchstens 85 MPa, weiter bevorzugt höchstens 80 MPa, weiter bevorzugt höchstens 75 MPa, weiter bevorzugt höchstens 70 MPa, beispielsweise höchstens 65 MPa oder höchstens 60 MPa,

## Thermischer Ausdehnungskoeffizient unterhalb des Glasübergangsbereiches

Aus der Literatur ist bekannt, dass der thermische Ausdehnungskoeffizient z.B. für Metalle umgekehrt proportional zur Bindungsenergie (oder zur "Tiefe der interatomaren Potentialtöpfe") ist, siehe z.B. H. Föll, Skript zur Vorlesung "Einführung in die Materialwissenschaft I", Christian Albrechts-Universität Kiel, S. 79 - 83.

In einem einfachen Bild oxidischer Gläser setzt man die Kationen in jeweils einen von den umgebenden Sauerstoffatomen gebildeten Potentialtopf und nimmt als dessen Tiefe die Summe der Bindungsstärken der verschiedenen Einfachbindungen zu den umgebenden Sauerstoffatomen an, konzentriert also die gesamte Wechselwirkungsenergie in Potentialtöpfe mit den Kationen im Zentrum und den Sauerstoffatomen in der Peripherie. Damit muss der umgekehrte Fall nicht mehr betrachtet werden; er wäre auch schwerer zu analysieren, da sich ein Sauerstoffatom zwischen mehreren verschiedenartigen Kationen befinden kann, was umgekehrt in rein oxidischen Gläsern nicht vorkommen kann. Diese Werte sind tabelliert, z.B. in DE 102014 119 594 A1:

**Tabelle 3**

| Kation | Potentialtopftiefe / (kJ/mol) |
|--------|-------------------------------|
| Si | 1864 |
| B | 1572.5 |
| Al | 1537 |
| Mg | 999 |
| Ca | 1063 |
| Na | 440.5 |
| K | 395 |

Aus der Zusammensetzung eines Glases aus den oben angegebenen konstituierenden Phasen, den in den jeweiligen Phasen enthaltenen Anzahlen verschiedener Kationen und der oben tabellierten Potentialtopftiefen pro Kation lässt sich eine mittlere Potentialtopftiefe errechnen:

$$\overline{E_{pot}} = \frac{\sum_{i=1}^{n} c_i \cdot \sum_{j=1}^{m} z_{i,j} \cdot E_{pot,j}}{\sum_{i=1}^{n} c_i \cdot \sum_{j=1}^{m} z_{i,j}} \tag{13}$$

Dabei ist m die Zahl der auftretenden Kationentypen, $E_{pot,j}$ die oben tabellierte Potentialtopftiefe für den j-ten Kationentyp und $z_{j,i}$ die Anzahl der Kationen des j-ten Typs in der i-ten konstituierenden Phase. Die Summen über j sind im Folgenden tabelliert:

**Tabelle 4 "z-Summen" und "z-$E_{pot}$-Summen"**

| konstituierende Phase | Formel (auf ein einfaches Oxid normiert) | $\sum_{j=1}^{m} z_{i,j}$ ("z-Summe") | $\sum_{j=1}^{m} z_{i,j} \cdot E_{pot,j}$ / (kJ/mol) ("z-$E_{pot}$-Summe") |
|---|---|---|---|
| Reedmergnerit | $(Na_2O \cdot B_2O_3 \cdot 6SiO_2)/8$ | 1.25 | 1901.25 |
| Kalium-Reedmergnerit | $(K_2O \cdot B_2O_3 \cdot 6SiO_2)/8$ | 1.25 | 1889.875 |
| Albit | $(Na_2O \cdot Al_2O_3 \cdot 6SiO_2)/8$ | 1.25 | 1881 |
| Cordierit | $(2MgO \cdot 2Al_2O_3 \cdot 5SiO_2)/9$ | 1.222 | 1940.666667 |

(fortgesetzt)

| konstituierende Phase | Formel (auf ein einfaches Oxid normiert) | $\sum_{j=1}^{m} z_{i,j}$ ("z-Summe") | $\sum_{j=1}^{m} z_{i,j} \cdot E_{pot,j}$ / (kJ/mol) ("z-$E_{pot}$-Summe") |
|---|---|---|---|
| Anorthit | $(CaO \cdot Al_2O_3 \cdot 2SiO_2)/4$ | 1.25 | 1966.25 |
| Boroxid | $B_2O_3$ | 2 | 3145 |
| Siliziumdioxid | $SiO_2$ | 1 | 1864.00 |

Diese mittlere Bindungsstärke hängt, wie z.B. auch bei Metallen, siehe H. Föll, loc. cit., umgekehrt proportional mit dem thermischen Ausdehnungskoeffizienten zusammen. Eine Auswertung einer Reihe silicatischer Gläser unterschiedlichen Typs (Kalk-Natron-Gläser, Borosilicatgläser, Aluminosilicatgläser) führt zu folgender Formel:

$$CTE_{Glas} = \left( \frac{50116.33042 \left( \frac{kJ}{Mol} \right)}{\overline{E_{pot}}} - 26.1724514 \right) ppm/K \qquad (14)$$

Damit läßt sich der $CTE_{Glas}$ im Mittel auf 0,3ppm/K genau vorhersagen.

Da die Erreichbarkeit der gewünschten CTE-Differenz zwischen Kern und Oberfläche vom CTE des Kerns abhängt, werden diesbezüglich bestimmte Werte bevorzugt. Der nach Formel (14) berechnete $CTE_{Glas}$ beträgt bevorzugt mindestens 3,0 ppm/K, weiter bevorzugt mindestens 3,5 ppm/K, weiter bevorzugt mindestens 4,0 ppm/K, weiter bevorzugt mindestens 4,5 ppm/K, mehr bevorzugt mindestens 4,6 ppm/K, noch mehr bevorzugt mindestens 4,7 ppm/K, weiter bevorzugt mindestens 4,8 ppm/K, noch weiter bevorzugt mindestens 4,9 ppm/K. Der nach Formel (14) berechnete $CTE_{Glas}$ beträgt bevorzugt höchstens 7,0 ppm/K, mehr bevorzugt höchstens 6,5 ppm/K, noch mehr bevorzugt höchstens 6,0 ppm/K, weiter bevorzugt höchstens 5,5 ppm/K, weiter bevorzugt höchstens 5,4 ppm/K, weiter bevorzugt höchstens 5,3 ppm/K, weiter bevorzugt höchstens 5,2 ppm/K, weiter bevorzugt höchstens 5,1 ppm/K. Der CTE sollte allerdings nicht stark von einem CTE von ca. 5ppm/K abweichen, insbesondere im Fall von pharmazeutischen Gläsern, da bei diesen ein CTE von ca. 5 ppm/K üblich ist. Bevorzugt liegt der nach Formel (14) berechnete $CTE_{Glas}$ daher in einem Bereich von 3,0 bis 7,0 ppm/K, weiter bevorzugt von 3,5 bis 6,5 ppm/K, weiter bevorzugt von 4,0 bis 6,0 ppm/K, weiter bevorzugt von 4,5 bis 5,5 ppm/K, mehr bevorzugt von 4,6 bis 5,4 ppm/K, noch mehr bevorzugt von 4,7 bis 5,3 ppm/K, weiter bevorzugt von 4,8 bis 5,2 ppm/K, am meisten bevorzugt von 4,9 bis 5,1 ppm/K. Gemeint ist der $CTE_K$ des Kernglases.

Bevorzugt weist das Kernglas also einen nach Formel (14) berechneten $CTE_K$ in einem Bereich von 3,0 bis 7,0 ppm/K, weiter bevorzugt von 3,5 bis 6,5 ppm/K, weiter bevorzugt von 4,0 bis 6,0 ppm/K, weiter bevorzugt von 4,5 bis 5,5 ppm/K, mehr bevorzugt von 4,6 bis 5,4 ppm/K, noch mehr bevorzugt von 4,7 bis 5,3 ppm/K, weiter bevorzugt von 4,8 bis 5,2 ppm/K, am meisten bevorzugt von 4,9 bis 5,1 ppm/K auf. Der nach Formel (14) berechnete $CTE_K$ des Kernglases beträgt bevorzugt mindestens 3,0 ppm/K, weiter bevorzugt mindestens 3,5 ppm/K, weiter bevorzugt mindestens 4,0 ppm/K, weiter bevorzugt mindestens 4,5 ppm/K, mehr bevorzugt mindestens 4,6 ppm/K, noch mehr bevorzugt mindestens 4,7 ppm/K, weiter bevorzugt mindestens 4,8 ppm/K, am meisten bevorzugt mindestens 4,9 ppm/K. Der nach Formel (14) berechnete $CTE_K$ beträgt bevorzugt höchstens 7,0 ppm/K, weiter bevorzugt höchstens 6,5 ppm/K, weiter bevorzugt höchstens 6,0 ppm/K, weiter bevorzugt höchstens 5,5 ppm/K, mehr bevorzugt höchstens 5,4 ppm/K, noch mehr bevorzugt höchstens 5,3 ppm/K, weiter bevorzugt höchstens 5,2 ppm/K, am meisten bevorzugt höchstens 5,1 ppm/K.

Bevorzugt weist das Oberflächenglas einen nach Formel (14) berechneten CTEo auf, der im Vergleich zu dem nach Formel (14) berechneten $CTE_K$ des Kernglases um mindestens 0,6 ppm/K, weiter bevorzugt mindestens 0,8 ppm/K, besonders bevorzugt mindestens 1 ppm/K, am meisten bevorzugt mindestens 1,2 ppm/K geringer ist. $\Delta CTE = CTE_K - CTEo$ liegt bevorzugt in einem Bereich von 0,6 ppm/K bis 2,4 ppm/K, beispielsweise 0,8 ppm/K bis 2,2 ppm/K, 1,0 ppm/K bis 2,0 ppm/K oder 1,2 ppm/K bis 1,8 ppm/K. $\Delta CTE = CTE_K - CTEo$ beträgt bevorzugt höchstens 2,4 ppm/K, beispielsweise höchstens 2,2 ppm/K, höchstens 2,0 ppm/K oder höchstens 1,8 ppm/K.

**Dichte, Molvolumen und Packungsdichte**

Für die Berechnung des E-Moduls sind die Kenntnis der Dichte, des Molvolumens und der Packungsdichte erforderlich.

Bemerkenswerterweise lässt sich die Dichte $\rho$ sehr einfach per Hebelregel aus den Molmassen $M_i$ und Dichten $\rho_i$ der konstituierenden Phasen berechnen:

$$\rho = \frac{\sum_{i=1}^{n} c_i \cdot M_i}{\sum_{i=1}^{n} c_i \cdot \frac{M_i}{\rho_i}} \qquad (15)$$

Der Zähler von (15) ist dabei die Molmasse, der Nenner das Molvolumen $V_{mol}$ des Glases. Damit läßt sich die Dichte für die hier adressierten Glassysteme im Mittel auf 1% genau vorhersagen.

Die Dichtewerte finden sich in O.V. Mazurin, M.V. Streltsina, T.P. Shvaiko-Shvaikovskaya, Handbook of Glass Data A-C, Elsevier, Amsterdam, 1983-1987.

Bevorzugt liegt die Dichte im Hinblick auf das Transportgewicht unter der von gewöhnlichem Kalk-Natron-Glas, also unter 2,5 g/cm³, weiter bevorzugt unter 2,45 g/cm³, noch weiter bevorzugt unter 2,4 g/cm³, am meisten bevorzugt unter 2,35 g/cm³.

Der Einfluß der Dichte auf den E-Modul ist tendenziell gegenläufig, so dass Werte von mindestens 2,2 g/cm³ bevorzugt werden, weiter bevorzugt Werte von mindestens 2,25 g/cm³, noch weiter bevorzugt Werte von mindestens 2,3 g/cm³.

Aus dem Molvolumen berechnen wir als Zwischengröße für weitere Rechnungen noch die Packungsdichte $\chi$ des Glases. Dazu berechnen wir für jede konstituierende Phase zunächst das (molare) Ionenvolumen. Darunter verstehen wir das Volumen, das die zu einem Mol der konstituierenden Phase (genau: ein Mol der auf ein einfaches Oxid normierten konstituierenden Phase) einnehmen, wenn man sie als kugelförmige Ionen mit dem von Robert Shannon so genannten "Crystal Radius" auffasst, siehe Robert D. Shannon, Revised Effective Ionic Radii and Systematic Studies of Interatomic Distances in Halides and Chalcogenides, Acta Cryst. A32 (1976), S. 751-767. Diese Radien unterscheiden sich je nach Koordinationszahl. Für die Kationen sind die dazu notwendigen Koordinationszahlen der unten bei der Diskussion der konstituierenden Phasen gelisteten mineralogischen Literatur entnommen worden; nach Conradt R., loc. cit., gehen wir davon aus, dass die Koordinationszahlen der Kationen im Glas gleich denen der entsprechenden Kristallphasen sind. Die Sauerstoffatome werden entsprechend der Wertigkeit den Kationen zugeordnet, sprich auf ein Natriumion entfällt ein halbes Sauerstoffion usw. Für das einzelne Sauerstoffion wird dann angenommen, daß es passend zu dieser Zuordnung koordiniert ist, d.h. ein einem Siliziumion zugeordnetes Sauerstoffion ist zweifach koordiniert usw. Liegen für einzelne Koordinationszahlen keine expliziten Radiuswerte in der Tabelle von Robert D. Shannon, loc. cit., vor, wird inter- bzw. extrapoliert.

Die sich daraus ergebenden molaren Ionenvolumina sind zusammen mit den Molmassen und Dichtewerten im folgenden tabelliert.

**Tabelle 5 Molmassen, Dichten und molare Ionenvolumina der normierten konstituierenden Phasen**

| konstituieren de Phase | Formel (auf ein einfaches Oxid normiert) | $M_i$/g | $\rho_i$/ (g/cm³) | Ionenvolumen $V_{ion,i}$ / cm³ |
|---|---|---|---|---|
| Reedmergnerit | $(Na_2O \cdot B_2O_3 \cdot 6SiO_2)/8$ | 61.513 | 2.445 | 10.18044415 |
| Kalium-Reedmergnerit | $(K_2O \cdot B_2O_3 \cdot 6SiO_2)/8$ | 65.540 | 2.417 | 12.17972854 |
| Albit | $(Na_2O \cdot Al_2O_3 \cdot 6SiO_2)/8$ | 65.555 | 2.368 | 10.2644898 |
| Cordierit | $(2MgO \cdot 2Al_2O_3 \cdot 5SiO_2)/9$ | 64.994 | 2.635 | 9.754984882 |
| Anorthit | $(CaO \cdot Al_2O_3 \cdot 2SiO_2)/4$ | 69.552 | 2.694 | 10.55580119 |
| Boroxid | $B_2O_3$ | 69.619 | 1.82 | 13.4254877 |
| Siliziumdioxid | $SiO_2$ | 60.084 | 2.203 | 9.100438178 |

Die Packungsdichte ergibt sich damit zu:

$$\chi = \frac{\sum_{i=1}^{n} c_i \cdot V_{ion,i}}{\sum_{i=1}^{n} c_i \cdot \frac{M_i}{\rho_i}} \qquad (16)$$

Da der E-Modul tendenziell umso höher ist, je größer die Packungsdichte ist, werden die folgenden Werte in aufsteigender Reihenfolge bevorzugt: > 0,35; > 0,355; > 0,36; > 0,365; > 0,37; > 0,375; > 0,38; > 0,385; > 0,39; > 0,395; > 0,4.

**Elastizitätsmodul**

Ausgangspunkt für die Berechnung des Elastizitätsmoduls ist die Theorie von Makishima und Mackenzie, siehe "Direct calculation of Young's modulus of glass", "Calculation of bulk modulus, shear modulus and Poisson's ratio of glass", J. Non-Crystall. Sol., 1973 und 1975. Nach dieser Theorie läßt sich das Elastizitätsmodul darstellen durch:

$$E \propto \chi \cdot \sum_{i=1}^{n} e_{Diss.,i} \cdot c_i \qquad (17)$$

Dabei ist $e_{diss.,i}$ die Dissoziationsenergiedichte der i-ten Komponente (Dimension z.B. kJ/cm$^3$) und $c_i$ deren molarer Anteil. $\chi$ ist die Packungsdichte.

Für die weiteren Rechnungen schreiben wir das um in:

$$E \propto \chi \cdot \frac{1}{V_{mol}} \cdot \sum_{i=1}^{n} E_{Diss.,i} \cdot c_i \qquad (18)$$

Unter Dissoziationsenergie verstehen Makishima und Mackenzie dasselbe wie die o.a. Bindungsstärke. Letztere haben wir oben den Kationen zugeordnet, so dass wir, wenn wir uns bei den Komponenten auf einfache Oxide beziehen, die gemittelte molare Dissoziationsenergie mit der o.a. mittleren Potentialtopftiefe eines Kations, multipliziert mit der Zahl z der Kationen pro Mol, identifizieren können:

$$\sum_{i=1}^{n} E_{Diss.,i} \cdot c_i = \sum_{i=1}^{n} c_i \cdot z_i \cdot E_{pot,i} = \overline{E_{pot}} \cdot \sum_{i=1}^{n} c_i \cdot z_i = \overline{E_{pot}} \cdot z \qquad (19)$$

Damit ergibt sich:

$$E \propto \chi \cdot \frac{\overline{E_{pot}} \cdot z}{V_{mol}} \qquad (20)$$

Mit der o.a. Theorie erhält man sehr gute Ergebnisse für Gläser, in denen keine Boroxolringe vorkommen; die von Makishima und Mackenzie vorgenommene adhoc-Erweiterung für Borate ist unbefriedigend.

Eine neue Theorie von Plucinski und Zwanziger ("Topological constraints and the Makishima-Mackenzie model", J. Non-Crystall. Sol., 2015), ergänzt den Ausdruck Kennzeichen um einen topologischen Vorfaktor, ist aber in der publizierten Form nur für rein kovalent gebundene Gläser (Chalkogenide) geeignet.

Vorliegend wird daher ein modifizierter topologischer Vorfaktor definiert.

Wesen topologischer Betrachtungen ist, wie beispielsweise in DE 10 2014 119 594 A1 ausführlich dargelegt, die den Atomen durch die Bindung zu den Nachbaratomen auferlegten Zwangsbedingungen abzuzählen. Diese Zwangsbedingungen betreffen zum einen Teil den interatomaren Abstand ("Abstandsbedingungen"), zum anderen die Bindungswinkel ("Winkelbedingungen"). Hat ein Atom r Nachbarn (r = Koordinationszahl), so folgen aus den r Abstandsbedingungen zu diesen Nachbarn r/2 diesem Atom zuzuordnende Abstandsbedingungen, wenn man die Abstandsbedingungen gleich unter beiden Bindungspartnern verteilt. Aus den Bindungswinkeln zwischen diesen Nachbarn, mit dem betrachteten Atom an der Spitze des jeweiligen Winkels, folgen weitere 2r-3 Winkelbedingungen, die diesem Atom zuzuordnen sind.

In DE 10 2014 119 594 A1 ist ein Verfahren beschrieben, das bei der Berechnung der Abstands- und Winkelbedingungen eine Wichtung aller Bedingungen mit der Einzelbindungsstärke und noch einmal eine zusätzliche Wichtung der Winkelbedingungen (nur die von den Sauerstoff-Kation-Sauerstoff-Winkeln herrührenden; die zu den Kation-Sauerstoff-Kation-Winkeln gehörenden Bedingungen werden vernachlässigt) mit dem Kovalenzgrad der jeweiligen Bindung vorsieht. Dabei sind die Wichtungsfaktoren normiert, indem jeweils durch die Einzelbindungsstärke bzw. den Kovalenzgrad der Silizium-Sauerstoffbindung geteilt wird, so dass sich für Quarzglas eine Zahl von (gerundet) 1,333333333 (d.h. 4/3) Abstandsbedingungen und (gerundet) 1,666666667 (d.h. 5/3) Winkelbedingungen pro Atom ergibt. Das entspricht, wie in DE 10 2014 119 594 A1 dargelegt, der direkten Analyse der Topologie von Quarzglas, wenn man alle Abstands- und Winkelbedingungen einfach zählt und die Winkelbedingungen der Silizium-Sauerstoff-Silizium-Winkel vernachlässigt.

Damit hat Quarzglas eine Zahl von "3" Zwangsbedingungen pro Atom, was genau der Zahl der Freiheitsgrade pro Atom entspricht. Quarzglas sollte also keine (oder realiter: eine sehr geringe) Zahl von Konfigurationsfreiheitsgraden pro Atom haben, was dem geringen $c_p$-Sprung von Quarzglas beim differenzkalorimetrisch gemessenen Glasübergang entspricht, siehe R. Brüning, "On the glass transition in vitreous silica by differential thermal analysis measurements", Journal of Non-Crystalline Solids 330 (2003) 13-22.

Für andere oxidische Gläser ergeben sich im Allgemeinen niedrigere Werte für die Zahlen der Abstands- und Winkelbedingungen pro Atom als (gerundet) 1,333333333 (4/3) bzw. 1,666666667 (5/3). Bei den Winkelbedingungen kann man noch unterscheiden, ob die zugehörigen Winkelbedingungen sich auf Winkel beziehen, die alle in einer Ebene liegen (trigonale Koordination) oder nicht (tetraedrische oder höhere Koordination). Letztere werden hier als 3D-Winkelbedingungen bezeichnet.

Entsprechend werden "4/3 minus Abstandsbedingungenzahl" als Abstandsfreiheitsgradezahl, "5/3 minus Winkelbedingungszahl als Winkelfreiheitsgradezahl und "5/3 minus 3D-Winkelbedingungenzahl" als 3DWinkelfreiheitsgradezahl bezeichnet, jeweils pro Atom (kurz: "p.A.").

Weiterhin greift folgende Überlegung. Der Modellansatz von Makishima-Mackenzie summiert und mittelt über isotrope Wechselwirkungen. Im Bereich der Boroxolringe ist die Wechselwirkung aber nicht isotrop, sondern es ist in der Ebene der Boroxolringe ein "kraftloses" Gleiten möglich.

Um dem Rechnung zu tragen, wird berücksichtigt, daß der Elastizitätsmodul E aus einem Scher- und einem Kompressions-/Dilatationsanteil zusammengesetzt ist. Dies wird durch die folgenden Gleichungen ausgedrückt, siehe z.B. H. Föll, Skript zur Vorlesung "Einführung in die Materialwissenschaft I", Christian Albrechts-Universität Kiel, S. 79 - 83:

$$\frac{1}{E} = \frac{1}{3G} + \frac{1}{9K} \qquad\qquad (21a)$$

$$G = \frac{E}{2(1+\mu)} \qquad\qquad (21b)$$

$$K = \frac{E}{3(1-2\mu)} \qquad\qquad (21c)$$

$$K = G\,\frac{2(1+\mu)}{3(1-2\mu)} \qquad\qquad (21d)$$

Dabei ist G der Schermodul, K der Kompressionsmodul und $\mu$ die Poissonzahl. E kann nach (21) wahlweise aus einem der Größenpaare G und K, G und $\mu$ sowie K und $\mu$ berechnet werden.

Die Theorie von Makashima und Mackenzie wird jetzt dahingehend modifiziert, daß die o.a. Proportionalität zwischen Modul und Dissoziationsenergiedichte nicht für den Elastizitätsmodul E, sondern für den Schermodul G angesetzt wird:

$$G \propto \frac{\overline{E_{pot}\cdot z}}{V_{mol}} \qquad\qquad (22)$$

Für den Schermodul wird an dieser Stelle keine weitere Proportionalität zur Packungsdichte angesetzt; die wie bei Makishima und Mackenzie auch hier gegebene Beziehung zur Packungsdichte wird weiter unten eingeführt.

Daß das Vorhandensein der Boroxolringe wegen der o.a. Gleitebenen zu einer Verkleinerung des Schermoduls führt, wird durch einen Vorfaktor f berücksichtigt, der als Verhältnis zwischen Zahlen definiert ist. Die erste Zahl ist die um (2/3) der Differenz von 3D-Winkelfreiheitsgradezahl p.A. und Winkelfreiheitsgradezahl p.A. verminderte Winkelbedingungenzahl p.A. Die zweite Zahl ist die Winkelbedingungenzahl p.A. Wenn keine Boroxolringe vorliegen, ist dieser Vorfaktor Eins; wenn Boroxolringe vorliegen, ist dieser Vorfaktor kleiner als Eins.

$$G \propto f \cdot \frac{\overline{E_{pot}\cdot z}}{V_{mol}} \;,$$

$$f = \frac{Winkelbedingungenzahl\ p.A.-\left(\frac{2}{3}\right)(3DWinkelfreiheitsgradezahl\ p.A.- Winkelfreiheitsgradezahl\ p.A.)}{Winkelbedingungenzahl\ p.A.} \qquad (23)$$

Die Zahl (2/3) ergibt sich aus folgender Überlegung, betreffend eine Scherung. Es wird angenommen, dass die Boroxolringe so verteilt gelagert sind, dass (1/3) in der Ebene liegen, die vom Scherwinkel überstrichen wird, und (2/3) in den Ebenen senkrecht dazu. Nur die beiden letztgenannten tragen zu einer Senkung des Schermoduls bei. Dementsprechend werden auch nur (2/3) derjenigen Winkelfreiheitsgrade gezählt, die sich zusätzlich ergeben, wenn man nicht alle Winkelbedingungen, sondern nur die 3D-Winkelbedingungen zählt.

Im Gegensatz zum Schermodul ist beim Kompressionsmodul keine erhebliche Veränderung durch das Vorhandensein der Gleitebenen zu erwarten. Aus Konsistenzgründen hat das eine Konsequenz für die Poissonzahl $\mu$. Dazu wird (21d) betrachtet. Wenn G sich durch die Einführung von Gleitebenen ändert und K sich dabei wegen ansonsten unveränderter Verhältnisse nicht ändern soll, kann und muss das durch eine Änderung $\Delta\mu_f$ von $\mu$ kompensiert werden. Um diese Änderung in erster Näherung zu quantifizieren, wird K in erster Ordnung nach f und $\mu$ entwickelt; es wird dann noch gefordert, daß $\Delta K = 0$ gilt:

$$\Delta K \; = \frac{2(1+\mu)}{3(1-2\mu)}\frac{\partial G}{\partial f}\Delta f + G\left(\partial\,\frac{2(1+\mu)}{3(1-2\mu)}\Big/\partial\mu\right)\Delta\mu = \frac{2(1+\mu)}{3(1-2\mu)}\frac{G}{f}\Delta f + G\left(\frac{2}{(1-2\mu)^2}\right)\Delta\mu_f \overset{!}{=} 0 \qquad (24)$$

Daraus folgt:

$$\Delta\mu_f \; = -\left[\frac{(1+\mu)(1-2\mu)}{3}\frac{1}{f}\right]\Delta f \qquad (25)$$

Da die erfindungsgemäßen Gläser silicatische Gläser sind, wird als Aufpunkt für die Entwicklung Quarzglas gewählt. Für Quarzglas gelten $\mu = 0{,}17$ und $f = 1$, dementsprechend werden diese Werte in den eckige-Klammern-Ausdruck eingesetzt. Dieser Ausdruck nimmt damit den Wert 0,2574 an. Um $\Delta\mu_f$ für ein anderes silicatisches Glas zu erhalten, wird -0,2574 mit $\Delta f = f - 1$ multipliziert; dabei ist f der sich aus (23) für dieses andere Glas ergebende Wert.

Es ist beim Wechsel von Quarzglas auf ein anderes silicatisches Glas bezüglich $\mu$ noch ein anderer Umstand zu berücksichtigen. Andere silicatische Gläser haben ähnliche, aber unterschiedliche Packungsdichten, und es gilt eine positive Korrelation zwischen $\mu$ und der Packungsdichte, siehe Greaves, G., Greer, A., Lakes, R., Rouxel, T, Poisson's ratio and modern materials, Nature Mater 10, 823-837 (2011). Dies wird durch einen zweiten $\Delta\mu$-Term berücksichtigt, der $\Delta\mu_\chi$ genannt wird. Für die erfindungsgemäßen Gläser kann dieser als linear angenommen werden, so dass gilt:

$$\frac{\Delta\mu_\chi}{\mu} \; = \frac{\Delta\chi}{\chi} \qquad (26)$$

Als Aufpunkt wird wieder Quarzglas genommen, für das $\chi = 0.33367062$ gilt. $\Delta\chi$ wird dann aus dem nach (16) zu berechnenden Wert für $\chi$ und 0.33367062 gemäß $\Delta\chi = \chi - 0.33367062$ bestimmt. Im Nenner links wird $\mu = 0.17$ und im Nenner rechts $\chi = 0.33367062$ gesetzt. Damit berechnen wir $\mu$ für ein erfindungsgemäßes Glas nach:

$$\mu = 0.17 + \Delta\mu_f + \Delta\mu_\chi \qquad (27)$$

Der Ansatz für E lautet damit und mit (21b):

$$E = a \cdot 2 \cdot (1 + \mu) \cdot f \cdot \frac{\overline{E_{pot} \cdot z}}{V_{mol}} + b \qquad (28)$$

Im Hinblick auf diesen Zusammenhang ist es sinnvoll, $\mu$ größer als einen gewissen Mindestwert zu wählen. Bevorzugt wird $\mu > 0{,}18$, mehr bevorzugt $\mu > 0{,}185$, noch mehr bevorzugt $\mu > 0{,}19$, noch mehr bevorzugt $\mu > 0{,}195$.

"a" und "b" sind einstellbare Parameter. Die Auswertung einer Reihe verschiedener silicatischer Gläser unterschiedlichen Typs (Kalk-Natron-Gläser, Borosilicatgläser, Aluminosilicatgläser) führt zu folgender Formel:

$$E = \left(0.683888667\left(2 \cdot (1 + \mu) \cdot f \cdot \frac{\overline{E_{pot} \cdot z}}{V_{mol}}\right) - 39.4242404\right) GPa \qquad (29)$$

Dabei sind $E_{pot}$ in kJ/Mol, z dimensionslos (Mol Kationen pro Mol Glas) und $V_{mol}$ in cm$^3$ einzusetzen. $E_{pot}$ ist jeweils nach Formel (13) und Tabelle (4) zu bestimmen. $V_{mol}$ ist der Nenner in Gleichung (16). f wird aus den Winkelbedingungen nach Formel (23) und Tabelle (6) bestimmt. $\Delta\mu$ folgt nach Gleichung (27) aus $\Delta\mu_f$ und $\Delta\mu_\chi$. $\Delta\mu_f$ folgt nach Gleichung (25) aus f. $\Delta\mu_\chi$ wird mit Gleichung (26) bestimmt; notwendiger Input ist die Packungsdichte $\chi$, die ihrerseits nach Gleichung (16) bestimmt wird. Man erhält so einen mittleren Fehler von 2,5 GPa bei der Berechnung von E.

Da die erfindungsgemäßen Gläser eine Kombination der oben angegebenen konstituierenden Phasen aufweisen, ist es für die Berechnung der Zahl der Abstands-, Winkel- und 3D-Winkelbedingungen pro Atom zweckmäßig, diese zunächst für jede konstituierende Phase numerisch anzugeben.

Die folgenden Zahlenwerte sind zunächst nach dem in DE 10 2014 119 594 A1 angegebenen Verfahren berechnet worden, wobei hier die Zahl der Winkelbedingungen für alle Kationen berechnet worden ist und zwar so wie in DE 10 2014 119 594 A1 (aber dort nur für Bor und Aluminium); außerdem ist der Ionisationsgrad einer Kation-Sauerstoff-Verbindung nicht nach der Formel (8) aus der DE 10 2014 119 594 A1, sondern nach der Formel (3) aus Alberto Garcia, Marvon Cohen, First Principles Ionicity Scales, Phys. Rev. B 1993 berechnet worden. Die dazu notwendigen Koordinationszahlen sind der unten bei der Diskussion der konstituierenden Phasen gelisteten mineralogischen Literatur entnommen worden; nach Conradt R., loc. cit., gehen wir davon aus, dass die Koordinationszahlen der Kationen im Glas gleich denen der entsprechenden Kristallphasen sind.

Es gilt:

**Tabelle 6 Zahl der Abstandsbedingungen etc.**

| konstituierende Phase + Formel (auf ein einfaches Oxid normiert) | Atome / Baueinheit | Abstandsbedingungen / Atom $b_{A,i}$ | Winkelbedingungen / Atom $b_{W,i}$ | 3D-Winkelbedingungen / Atom $b_{3DW,i}$ |
|---|---|---|---|---|
| Reedmergnerit ($Na_2O \cdot B_2O_3 \cdot 6SiO_2$)/8 | 3.25 | 1.255364807 | 1.431196438 | 1.431196438 |
| Kalium-Reedmergnerit ($K_2O \cdot B_2O_3 \cdot 6SiO_2$)/8 | 3.25 | 1.247854077 | 1.427878942 | 1.427878942 |
| Albit ($Na_2O \cdot Al_2O_3 \cdot 6SiO_2$)/8 | 3.25 | 2.597273435 | 1.347768648 | 1.347768648 |
| Cordierit ($2MgO \cdot 2Al_2O_3 \cdot 5SiO_2$)/9 | 3.2222 | 1.292437472 | 1.239141194 | 1.239141194 |
| Anorthit ($CaO \cdot Al_2O_3 \cdot 2SiO_2$)/4 | 3.25 | 1.298283262 | 1.174000738 | 1.174000738 |
| Boroxid $B_2O_3$ | 5 | 1.349785408 | 1.496075913 | 0 |
| Siliziumdioxid $SiO_2$ | 3 | 1.333333333 | 1.666666667 | 1.666666667 |

Die Rechenvorschrift zur Bestimmung der Winkelbedingungen bw pro Atom am fertigen Glas lautet damit:

$$b_W = \frac{\sum_{i=1}^{n} c_i \cdot y_i \cdot b_{W,i}}{\sum_{i=1}^{n} c_i \cdot y_i} \qquad (30)$$

wobei $c_i$ der molare Anteil der i-ten konstituierenden Phase in der betrachteten Glaszusammensetzung ist, $y_i$ die Zahl der Atome pro Baueinheit in der i-ten konstituierenden Phase und $b_{W,i}$ die Zahl der Winkelbedingungen pro Atom in der i-ten konstituierenden Phase. "n" ist die Zahl der konstituierenden Phasen.

Analog lautet die Rechenvorschrift zur Bestimmung der 3D-Winkelbedingungen $b_{3D-W}$ pro Atom am fertigen Glas:

$$b_{3D-W} = \frac{\sum_{i=1}^{n} c_i \cdot y_i \cdot b_{3D-W,i}}{\sum_{i=1}^{n} c_i \cdot y_i} \qquad (31)$$

wobei $b_{3D-W,i}$ die Zahl der 3D-Winkelbedingungen pro Atom in der i-ten konstituierenden Phase ist.

Analog lautet die Rechenvorschrift zur Bestimmung der Abstandsbedingungen $b_A$ pro Atom am fertigen Glas:

$$b_A = \frac{\sum_{i=1}^{n} c_i \cdot y_i \cdot b_{A,i}}{\sum_{i=1}^{n} c_i \cdot y_i} \qquad (32)$$

wobei $b_{A,i}$ die Zahl der Abstandsbedingungen pro Atom in der i-ten konstituierenden Phase ist.

**Verarbeitungspunkt**

Zur Berechnung des oberen Kühlpunktes $T_G$ ist zunächst die Berechnung des Verarbeitungspunktes VA vonnöten.

Der Verarbeitungspunkt VA, bei dem die Viskosität $10^4$ dPa s beträgt, läßt sich ähnlich wie die thermische Ausdehnung über die mittlere Bindungsstärke berechnen. Aus der Literatur ist bekannt, dass der Schmelzpunkt z.B. für Metalle umgekehrt proportional zur Bindungsenergie (oder zur "Tiefe der interatomaren Potentialtöpfe") ist, siehe z.B. H. Föll, Skript zur Vorlesung "Einführung in die Materialwissenschaft I", Christian Albrechts-Universität Kiel, S. 79 - 83; der Schmelzpunkt wird hier *cum grano salis* mit der Verarbeitungstemperatur identifiziert.

Man macht also den Ansatz VA = a·$\overline{E_{pot}}$+ b. Die Auswertung einer Reihe verschiedener silicatischer Gläser unterschiedlichen Typs (Kalk-Natron-Gläser, Borosilicatgläser, Aluminosilicatgläser) führt zu folgender Formel:

$$VA = 0.989573825 \cdot \overline{E_{pot}} \cdot \frac{°C}{kJ/mol} - 387.9923613°C \qquad (33)$$

Man erhält so einen mittleren Fehler von 28K bei der Berechnung von VA.

Im Hinblick auf den gewünschten flachen Verlauf der Viskositätskurve sollte der nach Formel (33) berechnete VA bevorzugt mindestens 1200°C, weiter bevorzugt mindestens 1210°C, besonders bevorzugt mindestens 1220°C, ganz besonders bevorzugt mindestens 1230°C, am meisten bevorzugt mindestens 1240°C betragen. Im Hinblick auf die Prozesstauglichkeit wiederum sollte der nach Formel (33) berechnete VA bevorzugt maximal 1300°C betragen, beispielsweise höchstens 1290°C, höchstens 1280°C, höchstens 1270°C oder höchstens 1260°C. Bevorzugt liegt der nach Formel (33) berechnete Verarbeitungspunkt VA in einem Bereich von 1200°C bis 1300°C, weiter bevorzugt von 1210°C bis 1290°C, weiter bevorzugt von 1220°C bis 1280°C, weiter bevorzugt von 1230°C bis 1270°C, weiter bevorzugt von 1240°C bis 1260°C.

**Differenz von Verarbeitungspunkt und oberem Kühlpunkt, oberer Kühlpunkt**

Im Hinblick auf die oben erwähnte Bedeutung der "Kürze" bzw. "Länge" eines Glases, also einem steilen bzw. flachen Verlauf der Viskositätskurve oberhalb des oberen Kühlpunktes, ist die Differenz zwischen Verarbeitungspunkt VA und oberem Kühlpunkt Tc, bei dem die Viskosität $10^{13}$ dPa·s beträgt, von besonderer Bedeutung.

Überraschenderweise hat sich herausgestellt, dass eine Beziehung zwischen dieser Differenz einerseits und der Zahl der Winkelfreiheitsgrade andererseits herrscht. Dies erlaubt eine unmittelbare Aussage über VA - $T_G$ sowie eine indirekte Bestimmung des oberen Kühlpunktes über die Beziehung Tc = VA - (VA - $T_G$).

Ausgangspunkt ist die folgende Überlegung. Wie weit $T_G$ und VA voneinander entfernt sind, ist eine Frage des Temperaturverlaufs der Viskosität im Bereich der unterkühlten Schmelze. Über schmale Temperaturintervalle lässt sich dieser mit dem thermischen Aktivierungsmodell von Arrhenius beschreiben. Für eine Beschreibung über den ganzen Temperaturbereich sind aufwendigere Modelle vonnöten. Am meisten verbreitet ist das Modell von Adam und Gibbs, siehe G. Adam, J.H. Gibbs, On the Temperature Dependence of Cooperative Relaxation Properties in Glass-Forming Liquids, J. Chem. Phys. 43 (1965) S. 139-145. Es kombiniert den thermischen Aktivierungsansatz von Arrhenius für die Bewegung eines einzelnen Atoms mit einer Überlegung, wieviele Atome zusammenspielen müssen, damit eine Teilbewegung des viskosen Fließens möglich ist. Das Ergebnis ist eine Beziehung zwischen der Viskosität und der Konfigurationsentropie.

Diese Beziehung erlaubt zu verstehen, warum es "kurze" und "lange" Gläser gibt und wie das von der Zusammensetzung abhängt. Die Faustregel ist: "je höher die Zahl der Konfigurationsfreiheitsgrade ist, desto 'kürzer' ist das Glas." Die Zahl der Konfigurationsfreiheitsgrade hängt wiederum, wie oben bereits dargelegt, von der Zusammensetzung ab. In Gläsern, in denen überwiegend kovalente Bindungen überwiegen, wie die zwischen Silizium und Sauerstoff, ist diese Zahl klein. In Gläsern mit vielen ionischen Bindungen wie zwischen Natrium und Sauerstoff ist sie hoch.

Ein quantitatives Maß der "Kürze" eines Glases, das sich hervorragend für tieferschürfende physikochemische Überlegungen eignet, ist das auf Austen Angell zurückgehende Konzept der "Fragilität", siehe Charles Austen Angell, Thermodynamic aspects of the glass transition in liquids and plastic crystals, Pure & Appl. Chem. 63, No. 10 (1991), S. 1387-1392.

Dieser Hintergrund hat nahegelegt, einen Zusammenhang zwischen der Größe VA - $T_G$ und der Zahl der Konfigurationsfreiheitsgrade zu testen. Weil wirkliche Umkonfigurierungen immer eine Ausnutzung der Winkelfreiheitsgrade beinhalten, wird hier auf letztere abgestellt. Die Zahl der Winkelfreiheitsgrade pro Atom fw wird dabei aus der Zahl der winkelbezogenen Zwangsbedingungen wie folgt errechnet, vergleiche (30).

$$f_W = 5/3 - b_W = 5/3 - \frac{\sum_{i=1}^{n} c_i \cdot y_i \cdot b_{W,i}}{\sum_{i=1}^{n} c_i \cdot y_i} \qquad (34)$$

Die Auswertung einer Reihe verschiedener silicatischer Gläser unterschiedlichen Typs (Kalk-Natron-Gläser, Borosilicatgläser, Aluminosilicatgläser) führt zu folgender Formel:

$$\frac{1}{VA-T_G} = (0.002665819 \cdot f_W + 0.001119212) \cdot \frac{1}{K} \qquad (35)$$

Aus VA und VA - $T_G$ läßt sich $T_G$ berechnen. Man erhält einen mittleren Fehler von 22K für $T_G$.

**Auswahl geeigneter konstituierender Phasen**

Reedmergnerit

Die Herstellung eines erfindungsgemäßen Produktes soll durch eine gezielte Ausnutzung der unterschiedlichen Tendenz der verschiedenen Glasbestandteile erfolgen, von offenen heißen Glasoberflächen abzudampfen. Diese Tendenz ist besonders bei Bor und Alkalis ausgeprägt, so daß von offen liegende Oberflächen von heißen Borosilicatgläsern ("heiß" bedeutet hier: in der Umgebung des Verarbeitungspunktes, also der Temperatur, bei der die Viskosität des Glases $10^4$ dPa·s beträgt) typischerweise Alkaliborat abdampft, siehe Johannes Alphonsius Christianus van Limpt, Modeling of evaporation processes in glass melting furnaces, Dissertation, Technische Universiteit Eindhoven, 2007, ISBN: 978-90-386-1147-1.

Im Hinblick darauf ist Reedmergnerit ein essentieller Bestandteil des erfindungsgemäßen Glases. Bei hohen Temperaturen, also typischerweise bei VA, dissoziiert Reedmergnerit zum Teil in Natriumborat, das abdampft, und in $SiO_2$, das in der Schmelze zurückbleibt. Bei tiefen Temperaturen, also typischerweise $T_G$, liegt Reedmergnerit nichtdissoziiert vor und ist aus $SiO_4$- und $BO_4$-Tetraedern aufgebaut, also ein Tektosilicat. Die das Gerüst ausstopfenden Natriumionen sind 5-fach koordiniert, siehe Appleman, D.E., Clark, J.R.: Crystal structure of reedmergnerite, a boron albite, and its relation to feldspar crystal chemistry. Am. J. Sci. 50, 1827-1850 (1965). Dies ist für den ebenfalls gewünschten hohen E-Modul von Vorteil.

Im Hinblick auf den im Vergleich zu dem hier gewünschten Maximalwert von $CTE_{Glas}$ hohen Wert des $CTE_{Glas}$ von Reedmergneritglas beträgt der Anteil von Reedmergnerit maximal 80 Mol%. Unter einem Mol Reedmergnerit wird ein Mol ($Na_2OB_2O_3 \cdot 6SiO_2$)/8 verstanden.

Der Anteil an Reedmergnerit in dem erfindungsgemäßen Kernglas beträgt 10 bis 80 Mol%, bevorzugt 12 bis 75 Mol%, weiter bevorzugt 15 bis 70 Mol%, weiter bevorzugt 18 bis 65 Mol%, weiter bevorzugt 20 bis 63 Mol%, weiter bevorzugt 21 bis 60 Mol%, weiter bevorzugt 22 bis 58 Mol%, weiter bevorzugt 24 bis 56 Mol%, weiter bevorzugt 26 bis 54 Mol%, weiter bevorzugt 28 bis 52 Mol%, weiter bevorzugt 30 bis 50 Mol%, weiter bevorzugt 33 bis 49 Mol%, weiter bevorzugt 36 bis 48 Mol%, weiter bevorzugt 39 bis 47 Mol%, weiter bevorzugt 42 bis 46 Mol%. Der Anteil an Reedmergnerit in dem erfindungsgemäßen Kernglas beträgt mindestens 10 Mol%, bevorzugt mindestens 12 Mol%, weiter bevorzugt mindestens 15 Mol%, weiter bevorzugt mindestens 18 Mol%, weiter bevorzugt mindestens 20 Mol%, weiter bevorzugt mindestens 21 Mol%, weiter bevorzugt mindestens 22 Mol%, weiter bevorzugt mindestens 24 Mol%, weiter bevorzugt mindestens 26 Mol%, weiter bevorzugt mindestens 28 Mol%, weiter bevorzugt mindestens 30 Mol%, weiter bevorzugt mindestens 33 Mol%, weiter bevorzugt mindestens 36 Mol%, weiter bevorzugt mindestens 39 Mol%, weiter bevorzugt mindestens 42 Mol%. Der Anteil an Reedmergnerit in dem erfindungsgemäßen Kernglas beträgt höchstens 80 Mol%, bevorzugt höchstens 75 Mol%, weiter bevorzugt höchstens 70 Mol%, weiter bevorzugt höchstens 65 Mol%, weiter bevorzugt höchstens 63 Mol%, weiter bevorzugt höchstens 60 Mol%, weiter bevorzugt höchstens 58 Mol%, weiter bevorzugt höchstens 56 Mol%, weiter bevorzugt höchstens 54 Mol%, weiter bevorzugt höchstens 52 Mol%, weiter bevorzugt höchstens 50 Mol%, weiter bevorzugt höchstens 49 Mol%, weiter bevorzugt höchstens 48 Mol%, weiter bevorzugt höchstens 47 Mol%, weiter bevorzugt höchstens 46 Mol%.

Der Anteil an Reedmergnerit in dem erfindungsgemäßen Oberflächenglas beträgt 2 bis 60 Mol%, bevorzugt 2,5 bis 55 Mol%, weiter bevorzugt 3 bis 50 Mol%, weiter bevorzugt 4 bis 45 Mol%, weiter bevorzugt 5 bis 40 Mol%, weiter bevorzugt 6 bis 38 Mol%, weiter bevorzugt 7 bis 36 Mol%, weiter bevorzugt 8 bis 34 Mol%, weiter bevorzugt 9 bis 32 Mol%, weiter bevorzugt 10 bis 30 Mol%, weiter bevorzugt 12 bis 29 Mol%, weiter bevorzugt 14 bis 28 Mol%, weiter bevorzugt 16 bis 27 Mol%, weiter bevorzugt 18 bis 26 Mol%, weiter bevorzugt 20 bis 25 Mol%. Der Anteil an Reedmergnerit in dem erfindungsgemäßen Oberflächenglas beträgt mindestens 2 bis 60 Mol%, bevorzugt mindestens 2,5 Mol%, weiter bevorzugt mindestens 3 Mol%, weiter bevorzugt mindestens 4 Mol%, weiter bevorzugt mindestens 5 Mol%, weiter bevorzugt mindestens 6 Mol%, weiter bevorzugt mindestens 7 Mol%, weiter bevorzugt mindestens 8 Mol%, weiter bevorzugt mindestens 9 Mol%, weiter bevorzugt mindestens 10 Mol%, weiter bevorzugt mindestens 12 Mol%, weiter bevorzugt mindestens 14 Mol%, weiter bevorzugt mindestens 16 Mol%, weiter bevorzugt mindestens 18 Mol%, weiter bevorzugt mindestens 20 Mol%. Der Anteil an Reedmergnerit in dem erfindungsgemäßen Oberflächenglas beträgt höchstens 60 Mol%, bevorzugt höchstens 55 Mol%, weiter bevorzugt höchstens 50 Mol%, weiter bevorzugt höchstens 45 Mol%, weiter bevorzugt höchstens 40 Mol%, weiter bevorzugt höchstens 38 Mol%, weiter bevorzugt höchstens 36 Mol%, weiter bevorzugt höchstens 34 Mol%, weiter bevorzugt höchstens 32 Mol%, weiter bevorzugt höchstens 30 Mol%, weiter bevorzugt höchstens 29 Mol%, weiter bevorzugt höchstens 28 Mol%, weiter bevorzugt höchstens 27 Mol%, weiter bevorzugt höchstens 26 Mol%, weiter bevorzugt höchstens 25 Mol%.

Bevorzugt liegt das Verhältnis des Anteils an Reedmergnerit im Kernglas zum Anteil an Reedmergnerit im Oberflächenglas in einem Bereich von 1,4:1 bis 7,0:1, weiter bevorzugt von 1,5:1 bis 6,0:1, weiter bevorzugt von 1,6:1 bis 5,0:1, weiter bevorzugt von 1,7:1 bis 4,5:1. Bevorzugt beträgt das Verhältnis des Anteils an Reedmergnerit im Kernglas zum Anteil an Reedmergnerit im Oberflächenglas mindestens 1,4:1, weiter bevorzugt mindestens 1,5:1, weiter bevorzugt mindestens 1,6:1, weiter bevorzugt mindestens 1,7:1. Bevorzugt beträgt das Verhältnis des Anteils an Reedmergnerit im Kernglas zum Anteil an Reedmergnerit im Oberflächenglas höchstens 7,0:1, weiter bevorzugt höchstens 6,0:1, weiter bevorzugt höchstens 5,0:1, weiter bevorzugt höchstens 4,5:1. Gewisse Unterschiede des Anteils an Reedmergnerit zwischen Kernglas und Oberflächenglas sind vorteilhaft, da sie in besonderem Maße zu den gewünschten CTE-Unterschieden zwischen Kernglas und Oberflächenglas beitragen. Es kann jedoch vorteilhaft sein, die Unterschiede des Reedmergneritanteils zu begrenzen, um sehr große CTE-Unterschiede zu vermeiden.

$SiO_2$

Im Hinblick auf den niedrigen gewünschten Maximalwert von $CTE_{Glas}$ wird das Reedmergnerit sinnvollerweise mit reinem $SiO_2$ als weiterer konstituierender Phase kombiniert. Ferner ist bekannt, daß ein hoher $SiO_2$-Anteil sinnvoll für eine hohe chemische Beständigkeit des Glases ist. Auch aus diesem Grund ist ein hoher Anteil von $SiO_2$ als konstituierender Phase erwünscht.

Dieser Anteil ist allerdings aus mehreren Gründen begrenzt. Einmal hat $SiO_2$ nicht den oben beschriebenen, zur Erzeugung eines CTE-Gradienten notwendigen Effekt, den Reedmergnerit hat. Außerdem ist $SiO_2$-Glas aus nichtgestopften $SiO_4$-Tetraedern aufgebaut, was von Nachteil für den gewünschten hohen E-Modul ist. Schließlich bewirkt ein zu hoher Anteil von $SiO_2$ als konstituierender Phase einen aus verarbeitungstechnischer Sicht zu hohen Verarbeitungspunkt des Glases.

Der Anteil an Siliziumdioxid in dem erfindungsgemäßen Kernglas beträgt 5 bis 60 Mol%, bevorzugt 10 bis 55 Mol%, weiter bevorzugt 12 bis 50 Mol%, weiter bevorzugt 14 bis 45 Mol%, weiter bevorzugt 15 bis 40 Mol%, weiter bevorzugt 16 bis 37 Mol%, weiter bevorzugt 18 bis 36 Mol%, weiter bevorzugt 20 bis 35 Mol%, weiter bevorzugt 22 bis 34 Mol%, weiter bevorzugt 25 bis 33 Mol%, weiter bevorzugt 27 bis 32 Mol%. Der Anteil an Siliziumdioxid in dem erfindungsgemäßen Kernglas beträgt mindestens 5 Mol%, bevorzugt mindestens 10 Mol%, weiter bevorzugt mindestens 12 Mol%, weiter bevorzugt mindestens 14 Mol%, weiter bevorzugt mindestens 15 Mol%, weiter bevorzugt mindestens 16 Mol%, weiter bevorzugt mindestens 18 Mol%, weiter bevorzugt mindestens 20 Mol%, weiter bevorzugt mindestens 22 Mol%, weiter bevorzugt mindestens 25 Mol%, weiter bevorzugt mindestens 27 Mol%. Der Anteil an Siliziumdioxid in dem erfindungsgemäßen Kernglas beträgt höchstens 60 Mol%, bevorzugt höchstens 55 Mol%, weiter bevorzugt höchstens 50 Mol%, weiter bevorzugt höchstens 45 Mol%, weiter bevorzugt höchstens 40 Mol%, weiter bevorzugt höchstens 37 Mol%, weiter bevorzugt höchstens 36 Mol%, weiter bevorzugt höchstens 35 Mol%, weiter bevorzugt höchstens 34 Mol%, weiter bevorzugt höchstens 33 Mol%, weiter bevorzugt höchstens 32 Mol%.

Der Anteil an Siliziumdioxid in dem erfindungsgemäßen Oberflächenglas beträgt 6 bis 80 Mol%, bevorzugt 12 bis 75 Mol%, weiter bevorzugt 15 bis 70 Mol%, weiter bevorzugt 20 bis 65 Mol%, weiter bevorzugt 25 bis 60 Mol%, weiter bevorzugt 30 bis 58 Mol%, weiter bevorzugt 35 bis 56 Mol%, weiter bevorzugt 40 bis 55 Mol%, weiter bevorzugt 42 bis 54 Mol%, weiter bevorzugt 44 bis 53 Mol%, weiter bevorzugt 45 bis 52 Mol%. Der Anteil an Siliziumdioxid in dem erfindungsgemäßen Oberflächenglas beträgt mindestens 6 Mol%, bevorzugt mindestens 12 Mol%, weiter bevorzugt mindestens 15 Mol%, weiter bevorzugt mindestens 20 Mol%, weiter bevorzugt mindestens 25 Mol%, weiter bevorzugt mindestens 30 Mol%, weiter bevorzugt mindestens 35 Mol%, weiter bevorzugt mindestens 40 Mol%, weiter bevorzugt mindestens 42 Mol%, weiter bevorzugt mindestens 44 Mol%, weiter bevorzugt mindestens 45 Mol%. Der Anteil an Siliziumdioxid in dem erfindungsgemäßen Oberflächenglas beträgt höchstens 80 Mol%, bevorzugt höchstens 75 Mol%, weiter bevorzugt höchstens 70 Mol%, weiter bevorzugt höchstens 65 Mol%, weiter bevorzugt höchstens 60 Mol%, weiter bevorzugt höchstens 58 Mol%, weiter bevorzugt höchstens 56 Mol%, weiter bevorzugt höchstens 55 Mol%, weiter bevorzugt höchstens 54 Mol%, weiter bevorzugt höchstens 53 Mol%, weiter bevorzugt höchstens 52 Mol%.

Bevorzugt liegt das Verhältnis des Anteils an Siliziumdioxid im Oberflächenglas zum Anteil an Siliziumdioxid im Kernglas in einem Bereich von 1,1:1 bis 4,0:1, weiter bevorzugt von 1,2:1 bis 3,5:1, weiter bevorzugt von 1,3:1 bis 3,0:1, weiter bevorzugt von 1,4:1 bis 2,5:1, weiter bevorzugt von 1,5:1 bis 2,0:1. Bevorzugt beträgt das Verhältnis des Anteils an Siliziumdioxid im Oberflächenglas zum Anteil an Siliziumdioxid im Kernglas mindestens 1,1:1:1, weiter bevorzugt mindestens 1,2:1, weiter bevorzugt mindestens 1,3:1, weiter bevorzugt mindestens 1,4:1, weiter bevorzugt mindestens 1,5:1. Bevorzugt beträgt das Verhältnis des Anteils an Siliziumdioxid im Oberflächenglas zum Anteil an Siliziumdioxid im Kernglas höchstens 4,0:1, weiter bevorzugt höchstens 3,5:1, weiter bevorzugt höchstens 3,0:1, weiter bevorzugt höchstens 2,5:1, weiter bevorzugt höchstens 2,0:1.

Kalium-Reedmergnerit

Um die Entglasungsstabilität zu erhöhen, kann dem Glas noch das Kalium-Analogon des Reedmergnerit beigemengt werden. Das fertige Glas enthält im Falle einer solchen Beimengung als Alkali nicht nur Natrium, sondern auch Kalium und ist von daher entglasungsstabiler.

Die entsprechende konstituierende Phase wird nachfolgend als "Kalium-Reedmergnerit" bezeichnet, da es als Kalium-Analogon des Reedmergnerit mit Danбуritstruktur aufgefasst werden kann, siehe Mineralogical Magazine 57 (1993) 157-164

Unter einem Mol Kalium-Reedmergnerit wird ein Mol $(K_2O \cdot B_2O_3 \cdot 6SiO_2)/8$ verstanden.

Der Anteil an Kalium-Reedmergnerit in dem erfindungsgemäßen Kernglas beträgt 0 bis 30 Mol%, bevorzugt 0 bis 25 Mol%, weiter bevorzugt 0 bis 20 Mol%, weiter bevorzugt 0 bis 15 Mol%. Wenn Kalium-Reedmergnerit enthalten ist, ist es bevorzugt in einem Anteil von 1 bis 15 Mol%, 1 bis 14 Mol%, 3 bis 12 Mol%, 4 bis 10 Mol%, oder 5 bis 9 Mol% enthalten. Der Anteil an Kalium-Reedmergnerit in dem erfindungsgemäßen Kernglas kann beispielsweise mindestens 1 Mol%, mindestens 3 Mol%, mindestens 4 Mol%, oder mindestens 5 Mol% enthalten. Der Anteil an Kalium-Reedmergnerit in dem erfindungsgemäßen Kernglas beträgt höchstens 30 Mol%, bevorzugt höchstens 25 Mol%, weiter bevorzugt höchstens 20 Mol%, weiter bevorzugt höchstens 15 Mol%, beispielsweise höchstens 14 Mol%, höchstens 12 Mol%, höchstens 10 Mol%, oder höchstens 9 Mol%.

Der Anteil an Kalium-Reedmergnerit in dem erfindungsgemäßen Oberflächenglas beträgt 0 bis 40 Mol%, bevorzugt 0 bis 35 Mol%, weiter bevorzugt 0 bis 30 Mol%, weiter bevorzugt 0 bis 25 Mol%. Wenn Kalium-Reedmergnerit enthalten ist, ist es bevorzugt in einem Anteil von 1 bis 25 Mol%, 1 bis 20 Mol%, 3 bis 15 Mol%, 4 bis 10 Mol%, oder 5 bis 9 Mol% im Oberflächenglas enthalten. Der Anteil an Kalium-Reedmergnerit in dem erfindungsgemäßen Oberflächenglas kann beispielsweise mindestens 1 Mol%, mindestens 3 Mol%, mindestens 4 Mol%, oder mindestens 5 Mol% betragen. Der Anteil an Kalium-Reedmergnerit in dem erfindungsgemäßen Oberflächenglas beträgt höchstens 40 Mol%, bevorzugt höchstens 35 Mol%, weiter bevorzugt höchstens 30 Mol%, weiter bevorzugt höchstens 25 Mol%, beispielsweise höchstens 20 Mol%, höchstens 15 Mol%, höchstens 10 Mol%, oder höchstens 9 Mol%.

Bevorzugt liegt das Verhältnis des Anteils an Kalium-Reedmergnerit im Oberflächenglas zum Anteil an Kalium-Reedmergnerit im Kernglas in einem Bereich von 0,5:1 bis 2,0:1, weiter bevorzugt von 0,6:1 bis 1,9:1, weiter bevorzugt von 0,7:1 bis 1,8:1, weiter bevorzugt von 0,8:1 bis 1,7:1, weiter bevorzugt von 0,9:1 bis 1,6:1. Bevorzugt beträgt das Verhältnis des Anteils an Kalium-Reedmergnerit im Oberflächenglas zum Anteil an Kalium-Reedmergnerit im Kernglas mindestens 0,5:1, weiter bevorzugt mindestens 0,6:1, weiter bevorzugt mindestens 0,7:1, weiter bevorzugt mindestens 0,8:1, weiter bevorzugt mindestens 0,9:1. Bevorzugt beträgt das Verhältnis des Anteils an Kalium-Reedmergnerit im Oberflächenglas zum Anteil an Kalium-Reedmergnerit im Kernglas höchstens 2,0:1, weiter bevorzugt höchstens 1,9:1, weiter bevorzugt höchstens 1,8:1, weiter bevorzugt höchstens 1,7:1, weiter bevorzugt höchstens 1,6:1. In Ausführungsformen der Erfindung ist der Anteil an Kalium-Reedmergnerit im Oberflächenglas größer als der Anteil an Kalium-Reedmergnerit im Kernglas. In anderen Ausführungsformen der Erfindung ist der Anteil an Kalium-Reedmergnerit im Oberflächenglas kleiner als der Anteil an Kalium-Reedmergnerit im Kernglas. Der Anteil an Kalium-Reedmergnerit im Oberflächenglas und im Kernglas kann annähernd gleich sein. Beispielsweise kann der Anteil im Oberflächenglas dem Anteil im Kernglas $\pm$ höchstens 10% oder $\pm$ höchstens 5% entsprechen.

Ähnlich wie Reedmergnerit trägt auch Kalium-Reedmergnerit zu CTE-Unterschieden zwischen Kernglas und Oberflächenglas bei, wenn sich die Kalium-Reedmergnerit-Anteile im Oberflächenglas von den Kalium-Reedmergnerit-Anteilen im Kernglas unterscheiden. Gewisse Unterschiede des Anteils an Reedmergnerit zwischen Kernglas und Oberflächenglas können vorteilhaft sein, da sie zu den gewünschten CTE-Unterschieden zwischen Kernglas und Oberflächenglas beitragen. Eine Begrenzung der Unterschiede kann dazu beitragen, sehr große CTE-Unterschiede zu vermeiden.

$B_2O_3$

Dibortrioxid als konstituierende Phase dampft ebenfalls ab, so daß die Anwesenheit von $B_2O_3$ den o.a. Effekt verstärkt. Das Maß der Abdampfung ist durch die relative Luftfeuchte steuerbar; im Falle der Anwesenheit von $H_2O$ dampft $B_2O_3$ in Form von Dioxoborsäure $HBO_2$ ab. Ein zu hoher Anteil von $B_2O_3$ senkt allerdings den E-Modul.

Der Anteil an Dibortrioxid in dem erfindungsgemäßen Kernglas beträgt 0 bis 20 Mol%, bevorzugt 0 bis 15 Mol%, weiter bevorzugt 0 bis 10 Mol%, weiter bevorzugt 0,5 bis 8 Mol%, weiter bevorzugt 0,8 bis 7 Mol%, weiter bevorzugt 1 bis 6 Mol%, weiter bevorzugt 1,5 bis 5,5 Mol%, weiter bevorzugt 2 bis 5 Mol%, weiter bevorzugt 2,5 bis 4,5 Mol%, weiter bevorzugt 3 bis 4 Mol%. Der Anteil an Dibortrioxid in dem erfindungsgemäßen Kernglas kann beispielsweise mindestens 0,5 Mol%, mindestens 0,8 Mol%, mindestens 1 Mol%, mindestens 1,5 Mol%, mindestens 2 Mol%, mindestens 2,5 Mol%, oder mindestens 3 Mol% betragen. Der Anteil an Dibortrioxid in dem erfindungsgemäßen Kernglas beträgt höchstens 20 Mol%, bevorzugt höchstens 15 Mol%, weiter bevorzugt höchstens 10 Mol%, weiter bevorzugt höchstens 8 Mol%, weiter bevorzugt höchstens 7 Mol%, weiter bevorzugt höchstens 6 Mol%, weiter bevorzugt höchstens 5,5 Mol%, weiter bevorzugt höchstens 5 Mol%, weiter bevorzugt höchstens 4,5 Mol%, weiter bevorzugt höchstens 4 Mol%.

Der Anteil an Dibortrioxid in dem erfindungsgemäßen Oberflächenglas beträgt 0 bis 15 Mol%, bevorzugt 0 bis 12,5 Mol%, weiter bevorzugt 0 bis 10 Mol%, weiter bevorzugt 0,2 bis 8 Mol%, weiter bevorzugt 0,5 bis 7 Mol%, weiter bevorzugt 0,8 bis 6 Mol%, weiter bevorzugt 1 bis 5,5 Mol%, weiter bevorzugt 1,5 bis 5 Mol%, weiter bevorzugt 2 bis 4,5 Mol%, weiter bevorzugt 2,5 bis 4 Mol%. Der Anteil an Dibortrioxid in dem erfindungsgemäßen Oberflächenglas kann beispielsweise mindestens 0,2 Mol%, mindestens 0,5 Mol%, mindestens 0,8 Mol%, mindestens 1 Mol%, mindestens 1,5 Mol%, mindestens 2 Mol%, oder mindestens 2,5 Mol% betragen. Der Anteil an Dibortrioxid in dem erfindungsgemäßen Oberflächenglas beträgt höchstens 15 Mol%, bevorzugt höchstens 12,5 Mol%, weiter bevorzugt höchstens 10 Mol%, weiter bevorzugt höchstens 8 Mol%, weiter bevorzugt höchstens 7 Mol%, weiter bevorzugt höchstens 6 Mol%, weiter bevorzugt höchstens 5,5 Mol%, weiter bevorzugt 1 höchstens 5 Mol%, weiter bevorzugt höchstens 4,5 Mol%, weiter bevorzugt höchstens 4 Mol%.

Bevorzugt liegt das Verhältnis des Anteils an Dibortrioxid im Kernglas zum Anteil an Dibortrioxid im Oberflächenglas in einem Bereich von 1,2:1 bis 3,5:1, weiter bevorzugt von 1,3:1 bis 3,0:1, weiter bevorzugt von 1,4:1 bis 2,5:1, weiter bevorzugt von 1,5:1 bis 2,4:1. Bevorzugt beträgt das Verhältnis des Anteils an Dibortrioxid im Kernglas zum Anteil an Dibortrioxid im Oberflächenglas mindestens 1,2:1, weiter bevorzugt mindestens 1,3:1, weiter bevorzugt mindestens 1,4:1, weiter bevorzugt mindestens 1,5:1. Bevorzugt beträgt das Verhältnis des Anteils an Dibortrioxid im Kernglas zum Anteil an Dibortrioxid im Oberflächenglas höchstens 3,5:1, weiter bevorzugt höchstens 3,0:1, weiter bevorzugt höchstens 2,5:1, weiter bevorzugt höchstens 2,4:1. Unterschiede des Dibortrioxid-Anteils zwischen Oberflächenglas und Kernglas können zu CTE-Unterschieden zwischen Oberflächenglas und Kernglas beitragen.

Es hat sich als besonders vorteilhaft herausgestellt, die Parameter des Herstellungsverfahrens derart einzustellen, dass die Reduktion des Anteils an Reedmergnerit und an Dibortrioxid im Oberflächenglas in einer vergleichbaren Größenordnung liegt. Dadurch können besonders vorteilhafte Druckspannungen erhalten werden. Bevorzugt liegt der Quotient aus dem Verhältnis des Anteils an Reedmergnerit im Kernglas zum Anteil an Reedmergnerit im Oberflächenglas einerseits und dem Verhältnis des Anteils an Dibortrioxid im Kernglas zum Anteil an Dibortrioxid im Oberflächenglas andererseits in einem Bereich von 0,5:1 bis 5:1, weiter bevorzugt von 0,75:1 bis 3:1. Bevorzugt gilt also bezüglich der jeweiligen Anteile von Reedmergnerit und Dibortrioxid im Oberflächenglas und im Kernglas:

$$0{,}5 \leq \frac{\left. Reedmergnerit_{Kern} \middle/ Reedmergnerit_{Oberfläche} \right.}{\left. Dibortrioxid_{Kern} \middle/ Dibortrioxid_{Oberfläche} \right.} \leq 5$$

Bevorzugt beträgt der Quotient aus dem Verhältnis des Anteils an Reedmergnerit im Kernglas zum Anteil an Reedmergnerit im Oberflächenglas einerseits und dem Verhältnis des Anteils an Dibortrioxid im Kernglas zum Anteil an Dibortrioxid im Oberflächenglas andererseits mindestens 0,5:1, weiter bevorzugt mindestens 0,75:1. Bevorzugt beträgt der Quotient aus dem Verhältnis des Anteils an Reedmergnerit im Kernglas zum Anteil an Reedmergnerit im Oberflächenglas einerseits und dem Verhältnis des Anteils an Dibortrioxid im Kernglas zum Anteil an Dibortrioxid im Oberflächenglas andererseits höchstens 5:1, weiter bevorzugt höchstens 3:1.

Albit

Zur Unterdrückung einer möglichen Entmischungsneigung eines reinen Borosilicatsystems kann optional als weitere Phase das Aluminium-Analogon des Reedmergnerit beigegeben werden, der Albit (American Mineralogist, Volume 81, pages 1344-1349, 1996), siehe zur Entmischungsfrage J.W. Greig, Immiscibility in silicate melts, Am. J. Sci., 5th ser., Vol. 13 (1927), 1-44 und 133-154. Unter einem Mol Albit wird erfindungsgemäß ein Mol $(Na_2O \cdot Al_2O_3 \cdot 6SiO_2)/8$ verstanden. Bei hohen Anteilen an Albit kann es zu einer Verschlechterung der Schmelzbarkeit kommen.

Der Anteil an Albit in dem erfindungsgemäßen Kernglas beträgt 0 bis 50 Mol%, bevorzugt 0,5 bis 45 Mol%, weiter bevorzugt 1 bis 40 Mol%, weiter bevorzugt 1,5 bis 35 Mol%, weiter bevorzugt 2 bis 33 Mol%, weiter bevorzugt 4 bis 30 Mol%, weiter bevorzugt 5 bis 27 Mol%, weiter bevorzugt 7 bis 25 Mol%, weiter bevorzugt 8 bis 22 Mol%, weiter bevorzugt 10 bis 20 Mol%, weiter bevorzugt 11 bis 18 Mol%, weiter bevorzugt 12 bis 16 Mol%. Der Anteil an Albit in dem erfindungsgemäßen Kernglas kann beispielsweise mindestens 0,5 Mol%, mindestens 1 Mol%, mindestens 1,5 Mol%, mindestens 2 Mol%, mindestens 4 Mol%, mindestens 5 Mol%, mindestens 7 Mol%, mindestens 8 Mol%, mindestens 10 Mol%, mindestens 11 Mol%, oder mindestens 12 Mol% betragen. Der Anteil an Albit in dem erfindungsgemäßen Kernglas beträgt höchstens 50 Mol%, bevorzugt höchstens 45 Mol%, weiter bevorzugt höchstens 40 Mol%, weiter bevorzugt höchstens 35 Mol%, weiter bevorzugt höchstens 33 Mol%, weiter bevorzugt höchstens 30 Mol%, weiter bevorzugt höchstens 27 Mol%, weiter bevorzugt höchstens 25 Mol%, weiter bevorzugt höchstens 22 Mol%, weiter bevorzugt höchstens 20 Mol%, weiter bevorzugt höchstens 18 Mol%, weiter bevorzugt höchstens 16 Mol%.

Der Anteil an Albit in dem erfindungsgemäßen Oberflächenglas beträgt 0 bis 70 Mol%, bevorzugt 1 bis 65 Mol%, weiter bevorzugt 2 bis 60 Mol%, weiter bevorzugt 2,5 bis 55 Mol%, weiter bevorzugt 3 bis 50 Mol%, weiter bevorzugt 4 bis 45 Mol%, weiter bevorzugt 5 bis 40 Mol%, weiter bevorzugt 7,5 bis 35 Mol%, weiter bevorzugt 10 bis 30 Mol%, weiter bevorzugt 12 bis 28 Mol%, weiter bevorzugt 15 bis 26 Mol%, weiter bevorzugt 16 bis 25 Mol%. Der Anteil an Albit in dem erfindungsgemäßen Oberflächenglas kann beispielsweise mindestens 1 Mol%, mindestens 2 Mol%, mindestens 2,5 Mol%, mindestens 3 Mol%, mindestens 4 Mol%, mindestens 5 Mol%, mindestens 7,5 Mol%, mindestens 10 Mol%, mindestens 12 Mol%, mindestens 15 Mol%, oder mindestens 16 Mol% betragen. Der Anteil an Albit in dem erfindungsgemäßen Oberflächenglas beträgt höchstens 70 Mol%, bevorzugt höchstens 65 Mol%, weiter bevorzugt höchstens 60 Mol%, weiter bevorzugt höchstens 55 Mol%, weiter bevorzugt höchstens 50 Mol%, weiter bevorzugt höchstens 45 Mol%, weiter bevorzugt höchstens 40 Mol%, weiter bevorzugt höchstens 35 Mol%, weiter bevorzugt höchstens 30 Mol%, weiter bevorzugt höchstens 28 Mol%, weiter bevorzugt höchstens 26 Mol%, weiter bevorzugt höchstens 25 Mol%.

Bevorzugt liegt das Verhältnis des Anteils an Albit im Oberflächenglas zum Anteil an Albit im Kernglas in einem Bereich von 1,02:1 bis 2,0:1, weiter bevorzugt von 1,05:1 bis 1,9:1, weiter bevorzugt von 1,08:1 bis 1,8:1, weiter bevorzugt von 1,1:1 bis 1,7:1, weiter bevorzugt von 1,12:1 bis 1,6:1, weiter bevorzugt 1,15:1 bis 1,5:1. Bevorzugt beträgt das Verhältnis des Anteils an Albit im Oberflächenglas zum Anteil an Albit im Kernglas mindestens 1,02:1, weiter bevorzugt mindestens 1,05:1, weiter bevorzugt mindestens 1,08:1, weiter bevorzugt mindestens 1,1:1, weiter bevorzugt mindestens 1,12:1, weiter bevorzugt mindestens 1,15:1. Bevorzugt beträgt das Verhältnis des Anteils an Albit im Oberflächenglas zum Anteil an Albit im Kernglas in einem Bereich höchstens 2,0:1, weiter bevorzugt höchstens 1,9:1, weiter bevorzugt höchstens 1,8:1, weiter bevorzugt höchstens 1,7:1, weiter bevorzugt höchstens 1,6:1, weiter bevorzugt höchstens 1,5:1.

Cordierit, Anorthit

Reedmergnerit und sein Kalium-Analogon sind alkalihaltig. Alkalihaltige Gläser haben, wie gesagt, einen hohen Ausdehnungskoeffizienten. Zur Einstellung des Ausdehnungskoeffizienten auf den gewünschten wert können $SiO_2$ und $B_2O_3$ beigemischt werden, die aber bzgl. des VA und des E-Moduls nur eingeschränkt verwendet werden können. Es können noch weitere Phasen beigemischt werden, deren Beitrag den Ausdehnungskoeffizienten zu mittleren Werten verschiebt, ohne die o.a. Nachteile von $SiO_2$ und $B_2O_3$ zu haben. Dies sind die Erdalkali(alumino-)silicate Cordierit und Anorthit. Unter einem Mol Cordierit wird ein Mol $(2MgO \cdot 2Al_2O_3 \cdot 5SiO_2)/9$ verstanden. Unter einem Mol Anorthit wird ein Mol $(CaO \cdot Al_2O_3 \cdot 2SiO_2)/4$ verstanden.

Der Vorteil dieser beiden Komponenten bei den erfindungsgemäßen Gläsern ist, daß Aluminium kaum eine Abdampfneigung hat und (auch wenn bei den u.a. Beispielen eine gewisse Verarmung der Oberfläche an Calcium zu beobachten ist) auch die Erdalkalis eine geringere Abdampftendenz als die Alkalis haben, siehe van Limpt, loc. cit., so daß durch die Anwesenheit dieser Phasen verhindert werden kann, daß sich durch das Abdampfen an der Oberfläche reines Quarzglas bildet, was wegen seiner extremen Eigenschaften (sehr hoher $T_G$ usw.) nicht wünschenswert ist.

Der Anteil an Cordierit in dem erfindungsgemäßen Kernglas beträgt 0 bis 10 Mol%, bevorzugt 0 bis 5 Mol%, weiter bevorzugt 0 bis 4 Mol%, weiter bevorzugt 0 bis 3 Mol%, weiter bevorzugt 0 bis 2 Mol%. Wenn Cordierit enthalten ist, ist es bevorzugt in einem Anteil von 0,1 bis 2 Mol%, 0,2 bis 1,5 Mol%, 0,3 bis 1,2 Mol%, 0,4 bis 1 Mol%, oder 0,5 bis 0,9 Mol% enthalten. Der Anteil an Cordierit in dem erfindungsgemäßen Kernglas kann beispielsweise mindestens 0,1 Mol%, mindestens 0,2 Mol%, mindestens 0,3 Mol%, mindestens 0,4 Mol%, oder mindestens 0,5 Mol% betragen. Der Anteil an Cordierit in dem erfindungsgemäßen Kernglas beträgt höchstens 10 Mol%, bevorzugt höchstens 5 Mol%, weiter bevorzugt höchstens 4 Mol%, weiter bevorzugt höchstens 3 Mol%, weiter bevorzugt höchstens 2 Mol%, beispielsweise höchstens 1,5 Mol%, höchstens 1,2 Mol%, höchstens 1 Mol%, oder höchstens 0,9 Mol%.

Der Anteil an Cordierit in dem erfindungsgemäßen Oberflächenglas beträgt 0 bis 10 Mol%, bevorzugt 0 bis 5 Mol%, weiter bevorzugt 0 bis 4 Mol%, weiter bevorzugt 0 bis 3 Mol%, weiter bevorzugt 0 bis 2 Mol%. Wenn Cordierit enthalten ist, ist es bevorzugt in einem Anteil von 0,1 bis 2 Mol%, 0,2 bis 1,5 Mol%, 0,3 bis 1,2 Mol%, 0,4 bis 1 Mol%, oder 0,5 bis 0,9 Mol% im Oberflächenglas enthalten. Der Anteil an Cordierit in dem erfindungsgemäßen Oberflächenglas kann beispielsweise mindestens 0,1 Mol%, mindestens 0,2 Mol%, mindestens 0,3 Mol%, mindestens 0,4 Mol%, oder mindestens 0,5 Mol% betragen. Der Anteil an Cordierit in dem erfindungsgemäßen Oberflächenglas beträgt höchstens 10 Mol%, bevorzugt höchstens 5 Mol%, weiter bevorzugt höchstens 4 Mol%, weiter bevorzugt höchstens 3 Mol%, weiter bevorzugt höchstens 2 Mol%, beispielsweise höchstens 1,5 Mol%, höchstens 1,2 Mol%, höchstens 1 Mol%, oder höchstens 0,9 Mol%.

In Ausführungsformen der Erfindung ist der Anteil an Cordierit im Oberflächenglas größer als der Anteil an Cordierit im Kernglas. In anderen Ausführungsformen der Erfindung ist der Anteil an Cordierit im Oberflächenglas kleiner als der Anteil an Cordierit im Kernglas. Der Anteil an Cordierit im Oberflächenglas und im Kernglas kann annähernd gleich sein. Beispielsweise kann der Anteil im Oberflächenglas dem Anteil im Kernglas $\pm$ höchstens 10% oder $\pm$ höchstens 5% entsprechen.

Der Anteil an Anorthit in dem erfindungsgemäßen Kernglas beträgt 0 bis 25 Mol%, bevorzugt 0 bis 20 Mol%, weiter bevorzugt 0 bis 15 Mol%, weiter bevorzugt 0 bis 13 Mol%, weiter bevorzugt 0,5 bis 12 Mol%, weiter bevorzugt 1 bis 11 Mol%, weiter bevorzugt 2 bis 10 Mol%, weiter bevorzugt 3 bis 9 Mol%, weiter bevorzugt 4 bis 8 Mol%. Der Anteil an Anorthit in dem erfindungsgemäßen Kernglas kann beispielsweise mindestens 0,5 Mol%, mindestens 1 Mol%, mindestens 2 Mol%, mindestens 3 Mol%, oder mindestens 4 Mol% betragen. Der Anteil an Anorthit in dem erfindungsgemäßen Kernglas beträgt höchstens 25 Mol%, bevorzugt höchstens 20 Mol%, weiter bevorzugt höchstens 15 Mol%, weiter bevorzugt höchstens 13 Mol%, weiter bevorzugt höchstens 12 Mol%, weiter bevorzugt höchstens 11 Mol%, weiter bevorzugt höchstens 10 Mol%, weiter bevorzugt höchstens 9 Mol%, weiter bevorzugt höchstens 8 Mol%.

Der Anteil an Anorthit in dem erfindungsgemäßen Oberflächenglas beträgt 0 bis 20 Mol%, bevorzugt 0 bis 15 Mol%, weiter bevorzugt 0 bis 13 Mol%, weiter bevorzugt 0 bis 12 Mol%, weiter bevorzugt 0,2 bis 10 Mol%, weiter bevorzugt 0,5 bis 9 Mol%, weiter bevorzugt 1 bis 8 Mol%, weiter bevorzugt 2 bis 7 Mol%, weiter bevorzugt 3 bis 6 Mol%. Der Anteil an Anorthit in dem erfindungsgemäßen Oberflächenglas kann beispielsweise mindestens 0,2 Mol%, mindestens 0,5 Mol%, mindestens 1 Mol%, mindestens 2 Mol%, oder mindestens 3 Mol% betragen. Der Anteil an Anorthit in dem erfindungsgemäßen Oberflächenglas beträgt höchstens 20 Mol%, bevorzugt höchstens 15 Mol%, weiter bevorzugt höchstens 13 Mol%, weiter bevorzugt höchstens 12 Mol%, weiter bevorzugt höchstens 10 Mol%, weiter bevorzugt höchstens 9 Mol%, weiter bevorzugt höchstens 8 Mol%, weiter bevorzugt höchstens 7 Mol%, weiter bevorzugt höchstens 6 Mol%.

Bevorzugt liegt das Verhältnis des Anteils an Anorthit im Kernglas zum Anteil an Anorthit im Oberflächenglas in einem Bereich von 1:1 bis 3,5:1, weiter bevorzugt von 1,05:1 bis 3,0:1, weiter bevorzugt von 1,1:1 bis 2,5:1, weiter bevorzugt von 1,15:1 bis 2,0:1. Bevorzugt beträgt das Verhältnis des Anteils an Anorthit im Kernglas zum Anteil an Anorthit im Oberflächenglas mindestens 1:1, weiter bevorzugt mindestens 1,05:1, weiter bevorzugt mindestens 1,1:1, weiter bevorzugt mindestens 1,15:1. Bevorzugt beträgt das Verhältnis des Anteils an Anorthit im Kernglas zum Anteil an Anorthit im Oberflächenglas in einem Bereich höchstens 3,5:1, weiter bevorzugt höchstens 3,0:1, weiter bevorzugt höchstens 2,5:1, weiter bevorzugt höchstens 2,0:1.

Weitere Komponenten

Zusätzlich zu den bereits genannten Komponenten kann das Glas weitere Bestandteile enthalten, die hierin als "Rest" bezeichnet werden. Der Anteil des Restes an dem erfindungsgemäßen Glas beträgt vorzugsweise höchstens 5 Mol-%, um die durch sorgsame Auswahl geeigneter Grundgläser eingestellten Glaseigenschaften nicht zu stören. In besonders bevorzugten Ausführungsformen beträgt der Anteil an Rest in dem Glas höchstens 3 Mol-%, mehr bevorzugt höchstens 2 Mol-% oder höchstens 1 Mol-% oder höchstens 0,5 Mol%. Der Rest enthält insbesondere Oxide, die nicht in den hierin genannten Grundgläsern enthalten sind. Somit enthält der Rest insbesondere kein $SiO_2$, $Al_2O_3$, $B_2O_3$, MgO, CaO, $Na_2O$ oder $K_2O$.

Wenn es in dieser Beschreibung heißt, die Gläser seien frei von einer Komponente bzw. einer konstituierenden Phase oder enthalten eine gewisse Komponente bzw. konstituierende Phase nicht, so ist damit gemeint, dass diese Komponente bzw. konstituierende Phase allenfalls als Verunreinigung in den Gläsern vorliegen darf. Das bedeutet, dass sie nicht in wesentlichen Mengen zugesetzt wird. Nicht wesentliche Mengen sind erfindungsgemäß Mengen von weniger als 300 ppm (molar), bevorzugt weniger als 100 ppm (molar), besonders bevorzugt weniger als 50 ppm (molar) und am meisten bevorzugt weniger als 10 ppm (molar). Die Gläser dieser Erfindung sind insbesondere frei von Zink, Barium, Zirkon, Blei, Arsen, Antimon, Zinn, Wismut und/oder Cadmium.

Alle Formeln zur Berechnung der Eigenschaften sind so gestaltet, daß der Wert berechnet wird, der zu einem zu 100% aus den konstituierenden Phasen bestehenden Glas gehört. Für die Berechnungen der Eigenschaften aus der Phasenzusammensetzung ist es also unerheblich, ob ein Rest vorliegt oder nicht. Die Formeln sind so gestaltet, dass mit Rest und ohne Rest dasselbe Ergebnis erhalten wird. Bei größeren Resten werden die Berechnungen entsprechend ungenauer.

**Herstellung**

Die vorliegende Erfindung betrifft auch ein Verfahren zur Herstellung eines erfindungsgemäßen Glasartikels mit den Schritten

- Schmelzen der Glasrohstoffe, insbesondere von Glasrohstoffen, die einer Zusammensetzung entsprechen, wie sie in dieser Beschreibung für das Bulkglas angegeben ist;

- Formen eines Glasartikels, insbesondere eines Glasrohres, aus der Glasschmelze

- Abkühlen des Glasartikels.

Das Verfahren umfasst bevorzugt eine Rohrformgebung durch Danner oder Vello oder Vertikalzug in einer Muffel. Die Muffelinnentemperatur liegt im Abschnitt des auffließenden Glases bevorzugt zwischen $T_G+0.55(VA-T_G)$ und $T_G+0.85(VA-T_G)$. Die Muffelinnentemperatur liegt im Abschnitt des Rohrabzuges bevorzugt zwischen $T_G+0.15(VA-T_G)$ und $T_G+0.45(VA-T_G)$. Der obere Kühlpunkt $T_G$ wird nach Formel (35) aus der Zusammensetzung des Kernglases in konstituierenden Phasen berechnet und der Verarbeitungspunkt VA wird nach Formel (33) aus der Zusammensetzung des Kernglases in konstituierenden Phasen berechnet.

Die Verweilzeit, die das Glas auf dem Formgebungswerkzeug im Viskositätsbereich 3000 dPas bis $10^8$ dPas hat, liegt bevorzugt in einem Bereich von 5 bis 60 Minuten.

Bevorzugt umfasst das Verfahren den weiteren Schritt

- Beaufschlagen des Glases mit einem wasserdampfhaltigen Gas während des Formens und/oder des Schmelzens, wobei die sich daraus ergebende Atmosphäre bevorzugt mehr als 2 Vol.-% $H_2O$ umfasst.

Im Folgenden werden bevorzugte Ausführungsformen der Herstellung näher beschrieben.

Die Herstellung erfolgt, wie gesagt, durch eine gezielte Ausnutzung der unterschiedlichen Tendenz der verschiedenen Glasbestandteile, insbesondere von Bor und Alkalis, von offenen heißen Glasoberflächen abzudampfen.

Der quantitative Umfang dieses Verarmens wird durch die Art der Prozeßführung bestimmt. Beim sogenannten Dannerverfahren zum Rohrzug beispielsweise fließt das heiße Glas zunächst aus einem Speiser auf eine schräg gelagerte, sich drehende, sogenannte Pfeife, die aus keramischem Material oder Edelmetall bestehen kann. Das Glas verteilt sich auf der Pfeife und fließt, der Schwerkraft folgend, zum unteren Ende der Pfeife. Dort ist es bereits soweit abgekühlt, daß die Viskosität hoch genug ist, um das Glas als Rohr von der Pfeife abzuziehen. Am Abzugsende ist die Pfeife als Blasdüse ausgeführt, so daß durch das Pfeifeninnere heranströmende und in das Rohr geblasene Luft selbiges am Kollabieren hindert.

Offensichtlich ist die Verweilzeit des Glases in dem Temperaturbereich, in dem es zum Abdampfen kommt, abhängig von der Menge des strömenden Glases, von der Geometrie der Dannerpfeife und des restlichen Aufbaus sowie vom Temperaturverlauf, den das Glas ab dem Speiser bis zum Ende der Dannerpfeife nimmt. Daraus und aus der relativen Luftfeuchtigkeit folgt das Ausmaß der Abdampfverluste. Insbesondere kann über die Einstellung der Parameter auch das Verhältnis der Reduktion von Reedmergnerit im Oberflächenglas zur Reduktion von Dibortrioxid im Oberflächenglas eingestellt werden. Es hat sich herausgestellt, dass es vorteilhaft bezüglich der Druckspannung ist, wenn die jeweiligen Unterschiede der Anteile zwischen Oberflächenglas und Kernglas in einer vergleichbaren Größenordnung liegen.

Wesentlich für das Abdampfen ist noch die Sättigung der Atmosphäre mit den abdampfenden Substanzen. Diese wird geometriebedingt an der inneren Oberfläche des Rohres sehr schnell und an der äußeren Oberfläche wegen des offen im Ofen liegenden Rohrzuges nie erreicht, so daß eine relevante Änderung der Zusammensetzung nur an der Außenseite beobachtet wird.

Die Prozeßparameter werden jetzt so gewählt, daß sich das gewünschte Produktverhalten ergibt. Von den für die Verdampfung an der Außenoberfläche bei der Rohrformgebung durch Danner - oder Vello oder Vertikalzug - in einer Muffel maßgeblichen Parameter wird

1) zunächst die Oberflächentemperatur des Glases zur offenen Atmosphäre eingestellt. Die Oberflächentemperatur wird durch die Auflauf- bzw. Düsentemperatur bestimmt und entlang des Rohrzuges über die Heizleistung/Wärmeverlust in der Muffel. Um die erwünschte Abkühlung des mit einer Temperatur zwischen VA-100°C und VA+250°C (wegen des in diesem Temperaturbereich sehr flachen Verlaufs der Viskositätskurve ist das ein enger Viskositätsbereich) auffließenden Glases im Bereich der Muffel zu erzielen, müssen die Temperaturen der Muffelinnenseite unter denen des Glases in den jeweiligen Abschnitten liegen. Dazu wird wiederum die Temperaturverteilung der Muffelinnenseite eingestellt und zwar so, daß eine relativ hohe Muffelinnentemperatur im Bereich des auffließenden Glases und eine relativ tiefe Muffelinnentemperatur im Bereich des Rohrabzuges eingestellt werden. Zum Erreichen des erwünschten Abdampfverhaltens liegt dieser Temperaturbereich zwischen $T_G$ und VA und zwar bevorzugt so, daß die relativ hohe Muffelinnentemperatur im Abschnitt des auffließenden Glases zwischen $T_G+0.55(VA-T_G)$ und $T_G+0.85(VA-T_G)$ liegt und daß die relativ tiefe Muffelinnentemperatur im Abschnitt des Rohrabzuges zwischen $T_G+0.15(VA-T_G)$ und $T_G+0.45(VA-T_G)$ liegt, besonders bevorzugt liegen diese Temperaturen zwischen $T_G+0.65(VA-T_G)$ und $T_G+0.75(VA-T_G)$ bzw. $T_G+0.25(VA-T_G)$ und $T_G+0.35(VA-T_G)$. Dabei beziehen sich $T_G$ und VA auf das unveränderte "bulk"-Material (Kernmaterial).

2) ferner die Verweilzeit auf der Außenoberfläche des Glasbelages auf dem Werkzeug eingestellt, die das Glas auf dem Formgebungswerkzeug im Viskositätsbereich 3000 bis 100000000 dPas ($10^8$ dPas) hat. Diese ist beeinflussbar durch das Rohrzugverfahren und die Geometrie des Formgebungswerkzeuges, insbesondere die flächenspezifische Abzugslast [t/m2*h] und wird zur Erreichung des gewünschten Abdampfverhaltens so eingestellt, daß sie bevorzugt 5-60min, weiter bevorzugt 10-30min und besonders bevorzugt 10-20min beträgt.

3) ferner der Gasaustausch der Atmosphäre und bzw. Sättigung der Atmosphäre mit Verdampfungsprodukten eingestellt.

Diese sind beeinflussbar durch

> a. Eindampfen von Wasser, Bor oder Alkaliborat in die Muffel sowie die Abdichtung der Muffel gegen Gasaustausch
> b. Wärmehaushalt (Isolation der Muffel, Abdichtung der Muffel)
> c. Art der Muffelbeheizung (Fossil direkt, Fossil indirekt, mit Luft, mit Sauerstoff, Elektro)

und werden so eingerichtet, daß der gewünschte Effekt speziell bezüglich der Abdampfung von $B_2O_3$ als konstituierender Phase erreicht wird, d.h. bezüglich der Volumenzusammensetzung der Atmosphäre in der Muffel: 0% $H_2O$, wenn keine besondere Förderung der Abdampfung von $B_2O_3$ als konstituierender Phase gewünscht wird, bevorzugt >2% $H_2O$, besonders bevorzugt >4% $H_2O$, ganz besonders bevorzugt >6% $H_2O$, noch weiter bevorzugt >8% $H_2O$, demgegenüber noch weiter bevorzugt >10% $H_2O$, demgegenüber noch weiter bevorzugt >12% $H_2O$, demgegenüber noch weiter bevorzugt >14% $H_2O$, demgegenüber noch weiter bevorzugt >16% $H_2O$, demgegenüber noch weiter bevorzugt >18% $H_2O$, demgegenüber noch weiter bevorzugt >20% $H_2O$, demgegenüber noch weiter bevorzugt >40% $H_2O$, demgegenüber noch weiter bevorzugt >60% $H_2O$.

Somit lassen sich angesichts der beschriebenen Maßnahmen Art und Ausmaß der Abdampfung und daher insbesondere auch das Verhältnis der Reduktion von Reedmergnerit und Dibortrioxid im Oberflächenglas derart einstellen, dass die gewünschten Druckspannungen erhalten werden.

Auch nach dem Verlassen des Formgebungswerkzeuges kann an der Außenoberfläche der Ziehzwiebel Verdampfung stattfinden; dieser Effekt ist aber untergeordnet.

Verwendung

Die Erfindung betrifft auch die Verwendung des Glasartikels als Behälter und/oder Verpackung, insbesondere für pharmazeutische Packmittel, beispielsweise als Behälter für Flüssigkeiten.

Beispiele

Die im folgenden aufgeführten Beispiele sind sowohl als bulk-Material als auch an der Oberfläche chemisch analysiert worden. Die Oberflächenanalyse ist dabei per TOF-SIMS erfolgt; im Hinblick auf das Ziel, mindestens Risse der Tiefe 1 - 10nm zusammendrücken zu können, wird als Oberflächenwert jeweils der Mittelwert der oberflächennahen Messungen bis zu einer Tiefe < 20nm herangezogen. Das trägt auch dem unvermeidbaren Rauschen dieser Methode Rechnung. Es wurden jeweils 5 oder 6 hinsichtlich der Tiefe ungefähr äquidistante Einzelmessungen ab ca. 5nm Tiefe bis <20nm Tiefe durchgeführt. Bestimmt wurden mit TOF-SIMS die Signalstärken für Si, B, Al, Na, K, Mg und Ca.

Die TOF-SIMS Signalstärken waren ab ca. 500nm Tiefe konstant, d.h., für 600nm oder 700nm Tiefe wurde für dieselbe Komponente (ungefähr) derselben Wert gemessen. Diesen Signalstärken wurde eine Konzentration in % zugeordnet und zwar genau die, die aus der normalen chemischen Analyse erhalten wurden. Diese Werte wurden zur Oberfläche hin fortgeschrieben. Die so ermittelten Oberflächenkonzentrationen wurden anschließend normiert, so dass deren Summe 100% betrug.

**Beispiel 1**

Beispiel 1 ist ein Boroaluminosilicatglas, das als Rohr des Außendurchmessers 10.75mm und der Wanddicke 0.5mm hergestellt worden ist und dessen Zusammensetzung an der Außenseite per TOF-SIMS bestimmt worden ist.

Die Zusammensetzungswerte im Kern sind gleich den Ergebnissen einer chemischen Analyse gesetzt worden, um so die TOF-SIMS-Meßwerte zu normieren. Wenn man die Ergebnisse der TOF-SIMS in Richtung Oberfläche fortschreibt (gleiche Signalstärke heißt gleicher Massenfluß), ergibt sich ausgedrückt in konstituierenden Phasen (gerundet):

Tabelle 7

| Konstituierende Phase | ~ im Kern / Mol% (normiert) | ~ an Oberfläche / Mol% (normiert) |
|---|---|---|
| Reedmergnerit ($Na_2O \cdot B_2O_3 \cdot 6SiO_2$)/8 | 44 | 25 |
| Kalium-Reedmergnerit ($K_2O \cdot B_2O_3 \cdot 6SiO_2$)/8 | 0 | 0 |
| Albit ($Na_2O \cdot Al_2O_3 \cdot 6SiO_2$)/8 | 14 | 19 |
| Cordierit ($2MgO \cdot 2Al_2O_3 \cdot 5SiO_2$)/9 | 0 | 0 |
| Anorthit ($CaO \cdot Al_2O_3 \cdot 2SiO_2$)/4 | 6 | 4 |
| Boroxid $B_2O_3$ | 4 | 2 |
| Siliziumdioxid $SiO_2$ | 32 | 50 |
| Summe | 100 | 100 |

Nach den Gleichungen (14, 27, 29, 33, 35) errechnen sich die folgenden Eigenschaftswerte (gerundet):

| Eigenschaft | Kern | Oberfläche |
|---|---|---|
| CTE | 4.8 ppm/K | 3.8 ppm/K |
| $E/(1-\mu)$ | 93.6 GPa | 90.0 GPa |
| $T_G$ | 597 °C | 607 °C |
| VA | 1213 °C | 1266 °C |
| Setzt man in (10) für $E/(1-\mu)$ und $T_G$ die Werte des Kernmaterials ein und für $\Delta CTE$ die Differenz der hier für Kern und Oberfläche gewonnenen Werte, so ergibt sich als Wert für die Druckvorspannung an der Oberfläche: | | |
| $\sigma_O$ | 53.5 MPa | |

**Beispiel 2**

Beispiel 2 ist ein Boroaluminosilicatglas, das als Rohr des Außendurchmessers 40.00mm und der Wanddicke 1.5mm hergestellt worden ist und dessen Zusammensetzung an der Außenseite per TOF-SIMS bestimmt worden ist.

Die Zusammensetzungswerte im Kern sind gleich den Ergebnissen einer chemischen Analyse gesetzt worden, um so die TOF-SIMS-Meßwerte zu normieren. Daraus ergibt sich ausgedrückt in konstituierenden Phasen (gerundet):

Tabelle 8

| Konstituierende Phase | ~ im Kern / Mol% (normiert) | ~ an Oberfläche / Mol% (normiert) |
|---|---|---|
| Reedmergnerit ($Na_2O \cdot B_2O_3 \cdot 6SiO_2$)/8 | 44 | 23 |
| Kalium-Reedmergnerit ($K_2O \cdot B_2O_3 \cdot 6SiO_2$)/8 | 0 | 0 |
| Albit ($Na_2O \cdot Al_2O_3 \cdot 6SiO_2$)/8 | 14 | 20 |
| Cordierit ($2MgO \cdot 2Al_2O_3 \cdot 5SiO_2$)/9 | 0 | 0 |
| Anorthit ($CaO \cdot Al_2O_3 \cdot 2SiO_2$)/4 | 6 | 5 |
| Boroxid $B_2O_3$ | 4 | 2 |
| Siliziumdioxid $SiO_2$ | 32 | 50 |
| Summe | 100 | 100 |

Nach den Gleichungen (14, 27, 29, 33, 35) errechnen sich die folgenden Eigenschaftswerte (gerundet):

| Eigenschaft | Kern | Oberfläche |
|---|---|---|
| CTE | 4.8 ppm/K | 3.8 ppm/K |

(fortgesetzt)

| Eigenschaft | Kern | Oberfläche |
|---|---|---|
| $E/(1-\mu)$ | 93.5 GPa | 90.1 GPa |
| $T_G$ | 597 °C | 612 °C |
| VA | 1213 °C | 1268 °C |
| Setzt man in (10) für $E/(1-\mu)$ und $T_G$ die Werte des Kernmaterials ein und für $\Delta$CTE die Differenz der hier für Kern und Oberfläche gewonnenen Werte, so ergibt sich als Wert für die Druckvorspannung an der Oberfläche: | | |
| $\sigma_O$ | 55.2 MPa | |

## Beispiel 3

Beispiel 3 ist ein Boroaluminosilicatglas, das als Rohr des Außendurchmessers 10,75mm und der Wanddicke 0,50mm hergestellt worden ist und dessen Zusammensetzung an der Außenseite per TOF-SIMS bestimmt worden ist.
Die Zusammensetzungswerte im Kern sind gleich den Ergebnissen einer chemischen Analyse gesetzt worden, um so die TOF-SIMS-Meßwerte zu normieren. Daraus ergibt sich ausgedrückt in konstituierenden Phasen (gerundet):

Tabelle 9

| Konstituierende Phase | ~ im Kern / Mol% (normiert) | ~ an Oberfläche / Mol% (normiert) |
|---|---|---|
| Reedmergnerit $(Na_2O \cdot B_2O_3 \cdot 6SiO_2)/8$ | 32 | 14 |
| Kalium-Reedmergnerit $(K_2O \cdot B_2O_3 \cdot 6SiO_2)/8$ | 3 | 4 |
| Albit $(Na_2O \cdot Al_2O_3 \cdot 6SiO_2)/8$ | 28 | 33 |
| Cordierit $(2MgO \cdot 2Al_2O_3 \cdot 5SiO_2)/9$ | 0 | 0 |
| Anorthit $(CaO \cdot Al_2O_3 \cdot 2SiO_2)/4$ | 2 | 2 |
| Boroxid $B_2O_3$ | 6 | 3 |
| Siliziumdioxid $SiO_2$ | 30 | 44 |
| Summe | 101 | 100 |

Die Abweichung der Summe von 100 Mol% im Kern ergibt sich aus der Rundung der Angaben.
Nach den Gleichungen (14, 27, 29, 33, 35) errechnen sich die folgenden Eigenschaftswerte (gerundet):

| Eigenschaft | Kern | Oberfläche |
|---|---|---|
| CTE | 5.0 ppm/K | 4.2 ppm/K |
| $E/(1-\mu)$ | 90.1 GPa | 88.0 GPa |
| $T_G$ | 591 °C | 607 °C |
| VA | 1202 °C | 1242 °C |
| Setzt man in (10) für $E/(1-\mu)$ und $T_G$ die Werte des Kernmaterials ein und für $\Delta$CTE die Differenz der hier für Kern und Oberfläche gewonnenen Werte, so ergibt sich als Wert für die Druckvorspannung an der Oberfläche: | | |
| $\sigma_O$ | 40.0 MPa | |

## Beispiel 4

Beispiel 4 ist ein Boroaluminosilicatglas, das als Rohr des Außendurchmessers 40.00mm und der Wanddicke 1.5mm hergestellt worden ist und dessen Zusammensetzung an der Außenseite per TOF-SIMS bestimmt worden ist.
Die Zusammensetzungswerte im Kern sind gleich den Ergebnissen einer chemischen Analyse gesetzt worden, um so die TOF-SIMS-Meßwerte zu normieren. Daraus ergibt sich ausgedrückt in konstituierenden Phasen (gerundet):

Tabelle 10

| Konstituierende Phase | ~ im Kern / Mol% (normiert) | ~ an Oberfläche / Mol% (normiert) |
|---|---|---|
| Reedmergnerit ($Na_2O \cdot B_2O_3 \cdot 6SiO_2$)/8 | 33 | 8 |
| Kalium-Reedmergnerit ($K_2O \cdot B_2O_3 \cdot 6SiO_2$)/8 | 4 | 4 |
| Albit ($Na_2O \cdot Al_2O_3 \cdot 6SiO_2$)/8 | 28 | 33 |
| Cordierit ($2MgO \cdot 2Al_2O_3 \cdot 5SiO_2$)/9 | 0 | 0 |
| Anorthit ($CaO \cdot Al_2O_3 \cdot 2SiO_2$)/4 | 3 | 2 |
| Boroxid $B_2O_3$ | 5 | 3 |
| Siliziumdioxid $SiO_2$ | 27 | 50 |
| Summe | 100 | 100 |

Nach den Gleichungen (14, 27, 29, 33, 35) errechnen sich die folgenden Eigenschaftswerte (gerundet):

| Eigenschaft | Kern | Oberfläche |
|---|---|---|
| CTE | 5.2 ppm/K | 3.9 ppm/K |
| $E/(1-\mu)$ | 91.1 GPa | 86.7 GPa |
| $T_G$ | 592 °C | 609.2 °C |
| VA | 1193 °C | 1263 °C |
| Setzt man in (10) für $E/(1-\mu)$ und $T_G$ die Werte des Kernmaterials ein und für $\triangle$CTE die Differenz der hier für Kern und Oberfläche | | |
| gewonnenen Werte, so ergibt sich als Wert für die Druckvorspannung an der Oberfläche: | | |
| $\sigma_O$ | 68.6 MPa | |

Die Zusammensetzung an der inneren Oberfläche (Innenseite der Rohre) ist bei den Beispielen 1-4 ebenfalls per TOF-SIMS gemessen worden; hier haben sich im Rahmen der Meßfehler keine Unterschiede zum Kern ergeben.

**Patentansprüche**

1. Glasartikel, umfassend ein Kernglas und ein Oberflächenglas, wobei das Oberflächenglas bis zu einer Tiefe von < 20 nm vorliegt und das Kernglas jedenfalls in 500 nm Tiefe vorliegt, wobei das Kernglas **gekennzeichnet ist durch** folgende das Kernglas konstituierenden Phasen:

| konstituierende Phase | Min (Mol%) | Max (Mol%) |
|---|---|---|
| Reedmergnerit | 10 | 80 |
| Kalium-Reedmergnerit | 0 | 30 |
| Albit | 0 | 50 |
| Cordierit | 0 | 10 |
| Anorthit | 0 | 25 |
| Dibortrioxid | 0 | 20 |
| Siliziumdioxid | 5 | 60 |

wobei das Oberflächenglas **gekennzeichnet ist durch** folgende das Oberflächenglas konstituierenden Phasen:

| konstituierende Phase | Min (Mol%) | Max (Mol%) |
|---|---|---|
| Reedmergnerit | 2 | 60 |
| Kalium-Reedmergnerit | 0 | 40 |
| Albit | 0 | 70 |
| Cordierit | 0 | 10 |
| Anorthit | 0 | 20 |
| Dibortrioxid | 0 | 15 |
| Siliziumdioxid | 6 | 80 |

wobei das Kernglas einen nach Formel (14)

$$CTE_{Glas} = \left( \frac{50116.33042 \left( \frac{kJ}{Mol} \right)}{\overline{E_{pot}}} - 26.1724514 \right) ppm/K$$

 berechneten $CTE_K$ in einem Bereich von 3,0 bis 7,0 ppm/K aufweist, und wobei das Oberflächenglas einen nach Formel (14) berechneten $CTE_o$ aufweist, der im Vergleich zu dem nach Formel (14) berechneten $CTE_K$ des Kernglases um mindestens 0,6 ppm/K geringer ist.

2. Glasartikel nach Anspruch 1, wobei das Kernglas **gekennzeichnet ist durch** folgende das Kernglas konstituierenden Phasen:

| konstituierende Phase | Min (Mol%) | Max (Mol%) |
|---|---|---|
| Reedmergnerit | 12 | 75 |
| Kalium-Reedmergnerit | 0 | 25 |
| Albit | 0,5 | 45 |
| Cordierit | 0 | 5 |
| Anorthit | 0 | 20 |
| Dibortrioxid | 0 | 15 |
| Siliziumdioxid | 10 | 55 |

und wobei das Oberflächenglas **gekennzeichnet ist durch** folgende das Oberflächenglas konstituierenden Phasen:

| konstituierende Phase | Min (Mol%) | Max (Mol%) |
|---|---|---|
| Reedmergnerit | 2,5 | 55 |
| Kalium-Reedmergnerit | 0 | 35 |
| Albit | 1 | 65 |
| Cordierit | 0 | 5 |
| Anorthit | 0 | 15 |
| Dibortrioxid | 0 | 12,5 |
| Siliziumdioxid | 12 | 75 |

3. Glasartikel nach mindestens einem der vorhergehenden Ansprüche, wobei das Verhältnis des Anteils an Reedmergnerit im Kernglas zum Anteil an Reedmergnerit im Oberflächenglas in einem Bereich von 1,4:1 bis 7,0:1 liegt und/oder wobei das Verhältnis des Anteils an Siliziumdioxid im Oberflächenglas zum Anteil an Siliziumdioxid im Kernglas in einem Bereich von 1,1:1 bis 4,0:1 liegt.

4.  Glasartikel nach mindestens einem der vorhergehenden Ansprüche, wobei der Anteil an Dibortrioxid im Kernglas mindestens 0,5 Mol% und im Oberflächenglas mindestens 0,2 Mol% beträgt, und wobei das Verhältnis des Anteils an Dibortrioxid im Kernglas zum Anteil an Dibortrioxid im Oberflächenglas in einem Bereich von 1,2:1 bis 3,5:1 liegt.

5.  Glasartikel nach mindestens einem der vorhergehenden Ansprüche, wobei der Quotient aus dem Verhältnis des Anteils an Reedmergnerit im Kernglas zum Anteil an Reedmergnerit im Oberflächenglas einerseits und dem Verhältnis des Anteils an Dibortrioxid im Kernglas zum Anteil an Dibortrioxid im Oberflächenglas andererseits in einem Bereich von 0,5:1 bis 5:1 liegt.

6.  Glasartikel nach mindestens einem der vorhergehenden Ansprüche, wobei der mit Hilfe der Formeln (29)

$$E = \left(0.683888667\left(2 \cdot (1+\mu) \cdot f \cdot \frac{\overline{E_{pot} \cdot z}}{V_{mol}}\right) - 39.4242404\right) GPa$$

und (27)

$$\mu = 0.17 + \Delta\mu_f + \Delta\mu_\chi$$

aus der Zusammensetzung des Kernglases in konstituierenden Phasen berechnete Quotient $Q_K$ aus dem elastischen Modul und der Größe (1-$\mu$) in einem Bereich von 80 GPa bis 105 GPa liegt.

7.  Glasartikel nach Anspruch 6, wobei der mit Hilfe der Formeln (29) und (27) aus der Zusammensetzung des Oberflächenglases in konstituierenden Phasen berechnete Quotient Qo aus dem elastischen Modul und der Größe (1-$\mu$) dem Quotienten $Q_K$ $\pm$ 10% entspricht.

8.  Glasartikel nach mindestens einem der vorhergehenden Ansprüche, wobei der nach Formel (33)

$$VA = 0.989573825 \cdot \overline{E_{pot}} \cdot \frac{{}^\circ C}{kJ/mol} - 387.9923613 {}^\circ C$$

aus der Zusammensetzung des Kernglases in konstituierenden Phasen berechnete Verarbeitungspunkt $VA_K$ in einem Bereich von 1120°C bis 1280°C liegt

9.  Glasartikel nach Anspruch 8, wobei der mit Hilfe der Formel (33) aus der Zusammensetzung des Oberflächenglases in konstituierenden Phasen berechnete Verarbeitungspunkt VAo dem Verarbeitungspunkt $VA_K$ $\pm$ 10% entspricht.

10. Glasartikel nach mindestens einem der vorhergehenden Ansprüche, wobei der nach Formel (35)

$$\frac{1}{VA - T_G} = (0.002665819 \cdot f_W + 0.001119212) \cdot \frac{1}{K}$$

aus der Zusammensetzung des Kernglases in konstituierenden Phasen berechnete obere Kühlpunkt $T_{G(K)}$ in einem Bereich von 540°C bis 650°C liegt.

11. Glasartikel nach Anspruch 10, wobei der mit Hilfe der Formel (35) aus der Zusammensetzung des Oberflächenglases in konstituierenden Phasen berechnete obere Kühlpunkt $T_{G(O)}$ dem oberen Kühlpunkt $T_{G(K)}$ $\pm$ 10% entspricht.

12. Glasartikel nach mindestens einem der vorhergehenden Ansprüche, wobei die nach Formel (10)

$$\sigma_O = \frac{E}{1-\mu} \cdot (T_G - T_{ambient}) \cdot \Delta CTE$$

berechnete Druckvorspannung an der Oberfläche $\sigma_0$ in einem Bereich von 25 bis 85 MPa liegt, wobei der Quotient aus dem elastischen Modul und der Größe $(1-\mu)$ mit Hilfe der Formeln (29) und (27) aus der Zusammensetzung des Kernglases in konstituierenden Phasen berechnet wird, wobei der obere Kühlpunkt $T_G$ nach Formel (35) aus der Zusammensetzung des Kernglases in konstituierenden Phasen berechnet wird, wobei $\Delta CTE$ als Differenz des nach Formel (14) berechneten $CTE_K$ und des nach Formel (14) berechneten $CTE_O$ berechnet wird, und wobei $T_{ambient} = 25°C$ angenommen wird.

13. Glasartikel nach mindestens einem der vorhergehenden Ansprüche, wobei der Artikel eine innere und eine äußere Oberfläche aufweist, und wobei das Oberflächenglas an der äußeren Oberfläche lokalisiert ist.

14. Verfahren zur Herstellung eines Glasartikels nach wenigstens einem der vorhergehenden Ansprüche, mit den Schritten

   - Schmelzen der Glasrohstoffe,
   - Formen eines Glasartikels, insbesondere eines Glasrohres, aus der Glasschmelze
   - Abkühlen des Glasartikels.

15. Verfahren nach Anspruch 14, wobei das Verfahren eine Rohrformgebung durch Danner oder Vello oder Vertikalzug in einer Muffel umfasst und wobei die Muffelinnentemperatur im Abschnitt des auffließenden Glases zwischen $T_G$+0.55(VA-$T_G$) und $T_G$+0.85(VA-$T_G$) liegt und die Muffelinnentemperatur im Abschnitt des Rohrabzuges zwischen $T_G$+0.15(VA-$T_G$) und $T_G$+0.45(VA-$T_G$) liegt, wobei der obere Kühlpunkt $T_G$ nach Formel (35) aus der Zusammensetzung des Kernglases in konstituierenden Phasen berechnet wird und wobei Verarbeitungspunkt VA nach Formel (33) aus der Zusammensetzung des Kernglases in konstituierenden Phasen berechnet wird.

16. Verfahren nach mindestens einem der Ansprüche 14 und 15, wobei die Verweilzeit, die das Glas auf dem Formgebungswerkzeug im Viskositätsbereich 3000 dPas bis $10^8$ dPas hat, in einem Bereich von 5 bis 60 Minuten liegt.

17. Verfahren nach mindestens einem der Ansprüche 14 bis 16, mit dem weiteren Schritt

   - Beaufschlagen des Glases mit einem wasserdampfhaltigen Gas während des Formens und/oder des Schmelzens, wobei die sich daraus ergebende Atmosphäre bevorzugt mehr als 2 Vol.-% $H_2O$ umfasst.

18. Verwendung eines Glasartikels nach einem der Ansprüche 1 bis 13 als Behälter und/oder Verpackung, insbesondere für pharmazeutische Packmittel.

**Claims**

1. A glass article, comprising a core glass and a surface glass, wherein the surface glass is present down to a depth of < 20 nm and the core glass is present at least in a depth of 500 nm, wherein the core glass is **characterized by** the following constituent phases of the core glass:

| Constituent phase | Min. (% by mol) | Max. (% by mol) |
|---|---|---|
| reedmergnerite | 10 | 80 |
| potassium reedmergnerite | 0 | 30 |
| albite | 0 | 50 |
| cordierite | 0 | 10 |
| anorthite | 0 | 25 |
| diboron trioxide | 0 | 20 |
| silicon dioxide | 5 | 60 |

wherein the surface glass is **characterized by** the following constituent phases of the surface glass:

| Constituent phase | Min. (% by mol) | Max. (% by mol) |
| --- | --- | --- |
| reedmergnerite | 2 | 60 |
| potassium reedmergnerite | 0 | 40 |
| albite | 0 | 70 |
| cordierite | 0 | 10 |
| anorthite | 0 | 20 |
| diboron trioxide | 0 | 15 |
| silicon dioxide | 6 | 80 |

wherein the core glass has a $CTE_K$ calculated according to formula (14)

$$CTE_{glass} = \left( \frac{50116.33042 \left( \frac{kJ}{mol} \right)}{E_{pot}} - 26.1724514 \right) ppm/K$$

in a range of 3.0 to 7.0 ppm/K, and wherein the surface glass has a $CTE_o$ calculated according to formula (14) which in comparison to the $CTE_K$ of the core glass calculated according to formula (14) is lower by at least 0.6 ppm/K.

2. The glass article according to claim 1, wherein the core glass is **characterized by** the following constituent phases of the core glass:

| Constituent phase | Min. (% by mol) | Max. (% by mol) |
| --- | --- | --- |
| reedmergnerite | 12 | 75 |
| potassium reedmergnerite | 0 | 25 |
| albite | 0.5 | 45 |
| cordierite | 0 | 5 |
| anorthite | 0 | 20 |
| diboron trioxide | 0 | 15 |
| silicon dioxide | 10 | 55 |

and wherein the surface glass is **characterized by** the following constituent phases of the surface glass:

| Constituent phase | Min. (% by mol) | Max. (% by mol) |
| --- | --- | --- |
| reedmergnerite | 2.5 | 55 |
| potassium reedmergnerite | 0 | 35 |
| albite | 1 | 65 |
| cordierite | 0 | 5 |
| anorthite | 0 | 15 |
| diboron trioxide | 0 | 12.5 |
| silicon dioxide | 12 | 75 |

3. The glass article according to at least one of the preceding claims, wherein the ratio of the portion of reedmergnerite in the core glass to the portion of reedmergnerite in the surface glass is in a range of 1.4:1 to 7.0:1 and/or wherein the ratio of the portion of silicon dioxide in the surface glass to the portion of silicon dioxide in the core glass is in a range of 1.1:1 to 4.0:1.

4. The glass article according to at least one of the preceding claims, wherein the portion of diboron trioxide in the core glass is at least 0.5% by mol and in the surface glass is at least 0.2% by mol, and wherein the ratio of the portion of diboron trioxide in the core glass to the portion of diboron trioxide in the surface glass is in a range of 1.2:1 to 3.5:1.

5. The glass article according to at least one of the preceding claims, wherein the quotient of the ratio of the portion of reedmergnerite in the core glass to the portion of reedmergnerite in the surface glass, on the one hand, and the ratio of the portion of diboron trioxide in the core glass to the portion of diboron trioxide in the surface glass, on the other hand, is in a range of 0.5: 1 to 5:1.

6. The glass article according to at least one of the preceding claims, wherein the quotient $Q_K$ of the elastic modulus and the parameter (1-$\mu$) calculated with the help of the formulas (29)

$$E = \left(0.683888667 \left(2 \cdot (1 + \mu) \cdot f \cdot \frac{\overline{E_{pot} \cdot z}}{V_{mol}}\right) - 39.4242404\right) GPa$$

and (27)

$$\mu = 0.17 + \Delta\mu_f + \Delta\mu_\chi$$

from the composition of the core glass in constituent phases is in a range of 80 GPa to 105 GPa.

7. The glass article according to claim 6, wherein quotient Qo of the elastic modulus and the parameter (1-$\mu$) calculated with the help of the formulas (29) and (27) from the composition of the surface glass in constituent phases corresponds to the quotient $Q_K \pm$ 10%.

8. The glass article according to at least one of the preceding claims, wherein the processing temperature $VA_K$ calculated according to formula (33)

$$VA = 0.989573825 \cdot \overline{E_{pot}} \cdot \frac{°C}{kJ/mol} - 387.9923613°C$$

from the composition of the core glass in constituent phases is in a range of 1120°C to 1280°C.

9. The glass article according to claim 8, wherein the processing temperature VAo calculated with the help of formula (33) from the composition of the surface glass in constituent phases corresponds to the processing temperature $VA_K \pm$ 10%.

10. The glass article according to at least one of the preceding claims, wherein the annealing temperature $T_{G(K)}$ calculated according to formula (35)

$$\frac{1}{VA - T_G} = (0.002665819 \cdot f_W + 0.001119212) \cdot \frac{1}{K}$$

from the composition of the core glass in constituent phases is in a range of 540°C to 650°C.

11. The glass article according to claim 10, wherein the annealing temperature $T_{G(O)}$ calculated with the help of formula (35) from the composition of the surface glass in constituent phases corresponds to the annealing temperature $T_{G(K)} \pm$ 10%.

12. The glass article according to at least one of the preceding claims, wherein the compressive prestress at the surface $\sigma_0$ calculated according to formula (10)

$$\sigma_O = \frac{E}{1-\mu} \cdot (T_G - T_{ambient}) \cdot \Delta CTE$$

is in a range of 25 to 85 MPa, wherein the quotient of the elastic modulus and the parameter $(1-\mu)$ is calculated with the help of the formulas (29) and (27) from the composition of the core glass in constituent phases, wherein the annealing temperature $T_G$ is calculated according to formula (35) from the composition of the core glass in constituent phases, wherein $\Delta CTE$ is calculated as the difference between the $CTE_K$ calculated according to formula (14) and the $CTE_o$ calculated according to formula (14), and wherein $T_{ambient} = 25°C$ is assumed.

13. The glass article according to at least one of the preceding claims, wherein the article has an inner and an outer surface, and wherein the surface glass is localized at the outer surface.

14. A method for the production of a glass article according to at least one of the preceding claims, with the steps

  - melting of the glass raw materials,
  - forming of a glass article, in particularly a glass tube, from the glass melt
  - cooling of the glass article.

15. The method according to claim 14, wherein the method comprises a tube shaping by Danner or Vello or vertical drawing in a muffle and wherein the inner temperature of the muffle in the section of the flowing down/spreading glass is between $T_G+0.55(VA-T_G)$ and $T_G+0.85(VA-T_G)$ and the inner temperature of the muffle in the section of the tube pulling off part is between $T_G+0.15(VA-T_G)$ and $T_G+0.45(VA-T_G)$, wherein the annealing temperature $T_G$ is calculated according to formula (35) from the composition of the core glass in constituent phases and wherein the processing temperature VA is calculated according to formula (33) from the composition of the core glass in constituent phases.

16. The method according to at least one of claims 14 and 15, wherein the residence time during which the glass is positioned on the shaping tool in the viscosity range of 3000 dPas to $10^8$ dPas is in a range of 5 to 60 minutes.

17. The method according to at least one of claims 14 to 16, with the further step

  - supplying the glass with a water vapor containing gas during the forming and/or the melting, wherein the atmosphere resulting thereof preferably comprises more the 2% by volume of $H_2O$.

18. A use of a glass article according to one of claims 1 to 13 as receptacle and/or packaging, in particularly for pharmaceutical packages.

**Revendications**

1. Article en verre, comprenant un verre de coeur et un verre de surface, le verre de surface étant présent à une profondeur < 20 nm et le verre de coeur étant présent à une profondeur d'au moins 500 nm, le verre de coeur étant **caractérisé par** les phases suivantes constituant le verre de coeur :

| phase constitutive | Min (mol %) | Max (mol %) |
|---|---|---|
| Reedmergnerite | 10 | 80 |
| Reedmergnerite-potassium | 0 | 30 |
| Albite | 0 | 50 |
| Cordiérite | 0 | dix |
| Anorthite | 0 | 25 |
| Trioxyde de dibore | 0 | 20 |
| Dioxyde de silicium | 5 | 60 |

le verre de surface étant **caractérisé par** les phases suivantes constituant le verre de surface :

| Phase constitutive | Min (mole %) | Max (mol %) |
|---|---|---|
| Reedmergnerite | 2 | 60 |
| ReedMergnerite-potassium | 0 | 40 |
| Albite | 0 | 70 |
| Cordiérite | 0 | 10 |
| Anorthite | 0 | 20 |
| Trioxyde de dibore | 0 | 15 |
| Dioxyde de silicium | 6 | 80 |

le verre de coeur ayant un $CTE_K$ calculé selon la formule (14)

$$CTE_{Glas} = \left( \frac{50116.33042 \left( \frac{kJ}{Mol} \right)}{\overline{E_{pot}}} - 26.1724514 \right) ppm/K$$

dans une gamme allant de 3,0 à 7,0 ppm/K et le verre de surface ayant un $CTE_O$ qui est calculé selon la formule (14) et qui est inférieur au $CTE_K$ du verre de coeur, calculé selon la formule (14), d'au moins 0,6 ppm/K.

2. Article en verre selon la revendication 1, dans lequel le verre de coeur est **caractérisé par** les phases suivantes constituant le verre de coeur :

| Phase constitutive | Min (mol%) | Maximum (mol %) |
|---|---|---|
| Reedmergnerite | 12 | 75 |
| Reedmergnerite-potassium | 0 | 25 |
| Albite | 0,5 | 45 |
| Cordiérite | 0 | 5 |
| Anorthite | 0 | 20 |
| Trioxyde de dibore | 0 | 15 |
| Dioxyde de silicium | 10 | 55 |

et le verre de surface étant **caractérisé par** les phases suivantes constituant le verre de surface :

| Phase constitutive | Min (mole %) | Max (mol %) |
|---|---|---|
| Reedmergnerite | 2,5 | 55 |
| Reedmergnerite-potassium | 0 | 35 |
| Albite | 1 | 65 |
| Cordiérite | 0 | 5 |
| Anorthite | 0 | 15 |
| Trioxyde de dibore | 0 | 12,5 |
| Dioxyde de silicium | 12 | 75 |

3. Article en verre selon l'une au moins des revendications précédentes, dans lequel le rapport de la quantité de Reedmergnerite dans le verre de coeur à la quantité de Reedmergnerite dans le verre de surface est dans une gamme allant de 1,4:1 à 7,0:1 et/ou le rapport de la quantité de dioxyde de silicium dans le verre de surface à la quantité de dioxyde de silicium dans le verre de coeur étant dans une gamme allant de 1,1:1 à 4,0:1.

4. Article en verre selon l'une au moins des revendications précédentes, dans lequel la quantité de trioxyde de dibore dans le verre de coeur est d'au moins 0,5 % molaire et dans le verre de surface d'au moins 0,2 % molaire, et le rapport de la quantité de trioxyde de dibore dans le verre de coeur à la quantité de trioxyde de dibore dans le verre de surface étant dans une gamme allant de 1,2:1 à 3,5:1.

5. Article en verre selon l'une au moins des revendications précédentes, dans lequel le quotient du rapport de la quantité de Reedmergnerite dans le verre de coeur à la quantité de Reedmergnerite dans le verre de surface d'une part et du rapport de la quantité de trioxyde de dibore dans le verre de coeur à la quantité de trioxyde de dibore dans le verre de surface d'autre part étant dans une gamme allant de 0,5:1 à 5:1.

6. Article en verre selon l'une au moins des revendications précédentes, dans lequel le quotient $Q_K$ du module d'élasticité et de la grandeur $(1-\mu)$, calculé à partir de la composition du verre de coeur dans des phases constitutives à l'aide des formules (29)

$$E = \left(0.683888667\left(2 \cdot (1+\mu) \cdot f \cdot \frac{\overline{E_{pot} \cdot z}}{V_{mol}}\right) - 39.4242404\right) GPa$$

et (27)

$$\mu = 0.17 + \Delta\mu_f + \Delta\mu_\chi,$$

étant dans une gamme allant de 80 GPa à 105 GPa.

7. Article en verre selon la revendication 6, dans lequel le quotient $Q_o$ du module d'élasticité et de la grandeur $(1-\mu)$, calculé à partir de la composition du verre de surfaces dans des phases constitutives à l'aide des formules (29) et (27), correspondant au quotient $Q_K \pm 10$ %.

8. Article en verre selon l'une au moins des revendications précédentes, dans lequel le point de transformation $VA_K$ calculé à partir de la composition du verre de coeur dans des phases constitutives selon la formule (33)

$$VA = 0.989573825 \cdot \overline{E_{pot}} \cdot \frac{{}^\circ C}{kJ/mol} - 387.9923613 {}^\circ C$$

est dans une gamme allant de 1120°C à 1280°C.

9. Article en verre selon la revendication 8, dans lequel le point de transformation $VA_o$, calculé à partir de la composition du verre de surface dans des phases constitutives selon la formule (33), correspond au point de transformation $VA_K \pm 10$ %.

10. Article en verre selon l'une au moins des revendications précédentes, dans lequel le point de recuit supérieur $T_{G(K)}$, calculé à partir de la composition du verre de coeur dans des phases constitutives selon la formule (35), est dans une gamme de 540 °C à 650 °C.

11. Article en verre selon la revendication 10, dans lequel le point de recuit $T_{G(O)}$, calculé à partir de la composition du verre de surface dans des phases constitutives à l'aide de la formule (35), correspondant au point de recuit supérieur $T_{G(K)} \pm 10$ %.

12. Article en verre selon l'une au moins des revendications précédentes, dans lequel la précontrainte de compression sur la surface $\sigma o$, calculée selon la formule (10)

$$\sigma_O = \frac{E}{1-\mu} \cdot (T_G - T_{ambient}) \cdot \Delta CTE$$

est dans une gamme allant de 25 à 85 MPa, le quotient du module d'élasticité et de la grandeur $(1-\mu)$ étant calculé à partir de la composition du verre de coeur dans des phases constitutives à l'aide des formules (29) et (27), le point de recuit supérieur $T_G$ étant calculé à partir de la composition du verre de coeur dans des phases constitutives selon la formule (35), $\Delta CTE$ étant calculé comme la différence entre le $CTE_K$ calculé selon la formule (14) et le $CTE_o$ calculé selon la formule (14) et $T_{ambient}$ étant supposé = 25 °C.

**13.** Article en verre selon l'une des revendications précédentes, dans lequel l'article comporte une surface intérieure et une surface extérieure et le verre de surface étant situé sur la surface extérieure.

**14.** Procédé de fabrication d'un article en verre selon l'une au moins des revendications précédentes, comprenant les étapes suivantes

    - faire fondre les matières premières du verre,
    - former un article en verre, en particulier un tube en verre, à partir du verre fondu
    - refroidir l'article en verre.

**15.** Procédé selon la revendication 14, dans lequel le procédé comprend un formage de tube par Danner ou Vello ou un étirage vertical dans un moufle et dans lequel la température intérieure du moufle dans la partie du verre qui s'écoule étant comprise entre $T_G$ + 0,55 (VA-$T_G$) et $T_G$ + 0,85 (VA-$T_G$) et la température intérieure du moufle dans la partie de sortie de tube étant comprise entre $T_G$ + 0,15 (VA-$T_G$) et $T_G$ + 0,45 (VA-$T_G$), le point de recuit supérieur $T_G$ étant calculé à partir de la composition du verre de coeur dans des phases constitutives selon la formule (35) et le point de transformation VA étant calculé à partir de la composition du verre de coeur dans des phases constitutives selon la formule (33).

**16.** Procédé selon l'une au moins des revendications 14 et 15, dans lequel le temps de séjour du verre sur l'outil de formage dans la gamme de viscosité de 3000 dPas à $10^8$ dPas est dans une gamme allant de 5 à 60 minutes.

**17.** Procédé selon l'une au moins des revendications 14 à 16, comprenant l'étape supplémentaire suivante

    - soumettre le verre à un gaz contenant de la vapeur d'eau lors du formage et/ou de la fusion, l'atmosphère résultante comprenant de préférence plus de 2 % en volume de $H_2O$.

**18.** Utilisation d'un article en verre selon l'une des revendications 1 à 13 en tant que contenant et/ou emballage, notamment pour le conditionnement pharmaceutique.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3360852 A1
- DE 102017102482 A1
- DE 102014119594 A1


**In der Beschreibung aufgeführte Nicht-Patentliteratur**

- **ARUN K. VARSHNEYA.** Chemical Strengthening of Glass: Lessons Learned and Yet To Be Learned. *International Journal of Applied Glass Science,* 2010, vol. 1 (2), 131-142
- **WERNER KIEFER.** Thermisches Vorspannen von Gläsern niedriger Wärmeausdehnung. *Glastechnische Berichte,* 1984, vol. 57 (9), 221-228
- **CONRADT R.** Chemical structure, medium range order, and crystalline reference state of multicomponent oxide liquids and glasses. *Journal of Non-Crystalline Solids,* 15. Oktober 2004, vol. 345-346, 16-23
- **FLÜSSIGKEITEN ; GLÄSER.** *Zeitschrift für anorganische und allgemeine Chemie,* 1931, vol. 203 (1), 219-227
- **B. WELLER ; S. TASCHE ; GLASBAU.** Wendehorst Bautechnische Zahlentafeln, Hrsg.: O.W. Wetzell. 2007, vol. 32
- **HERAUSGEBER L.J. BONIS ; J.J. DUGA ; J.J. GILMAN.** *The Strength of Inorganic Glasses, in: Fundamental Phenomena in the Materials Sciences,* 1967, 119-149
- Strength of Glass and Glass Fiber. **HONG LI.** Am. Ceram. Soc. Conference on Glass Problems, GMIC, Alfred University, 02. November 2015
- **O.V. MAZURIN ; M.V. STRELTSINA ; T.P. SHVAIKO-SHVAIKOVSKAYA.** Handbook of Glass Data A-C. Elsevier, 1983
- **ROBERT D. SHANNON.** Revised Effective Ionic Radii and Systematic Studies of Interatomic Distances in Halides and Chalcogenides. *Acta Cryst,* 1976, vol. 32, 751-767
- Calculation of bulk modulus, shear modulus and Poisson's ratio of glass. *J. Non-Crystall. Sol.,* 1973
- **PLUCINSKI ; ZWANZIGER.** Topological constraints and the Makishima-Mackenzie model. *J. Non-Crystall. Sol.,* 2015
- **R. BRÜNING.** On the glass transition in vitreous silica by differential thermal analysis measurements. *Journal of Non-Crystalline Solids,* 2003, vol. 330, 13-22
- **Z.B. H. FÖLL ; SKRIPT ZUR VORLESUNG.** Einführung in die Materialwissenschaft I. Christian Albrechts-Universität Kiel, 79-83
- **GREAVES, G. ; GREER, A. ; LAKES, R. ; ROUXEL, T.** Poisson's ratio and modern materials. *Nature Mater,* 2011, vol. 10, 823-837
- **ALBERTO GARCIA ; MARVON COHEN.** First Principles Ionicity Scales. *Phys. Rev. B,* 1993
- **Z.B. H. FÖLL.** Skript zur Vorlesung "Einführung in die Materialwissenschaft I. Christian Albrechts-Universität Kiel, 79-83
- **G. ADAM ; J.H. GIBBS.** On the Temperature Dependence of Cooperative Relaxation Properties in Glass-Forming Liquids. *J. Chem. Phys,* 1965, vol. 43, 139-145
- **AUSTEN ANGELL.** Thermodynamic aspects of the glass transition in liquids and plastic crystals. *Pure & Appl. Chem,* 1991, vol. 63 (10), 1387-1392
- **JOHANNES ALPHONSIUS CHRISTIANUS VAN LIMPT.** Modeling of evaporation processes in glass melting furnaces. Technische Universiteit Eindhoven, 2007
- **APPLEMAN, D.E. ; CLARK, J.R.** Crystal structure of reedmergnerite, a boron albite, and its relation to feldspar crystal chemistry. *Am. J. Sci,* 1965, vol. 50, 1827-1850